# EUROPEAN PATENT APPLICATION

(11) **EP 2 218 960 A1**
(43) Date of publication of application: **18.08.2010**
(21) Application number: 08873196.3
(22) Date of filing: 21.11.2008
(51) Int. Cl.: F21S 2/00, G02F 1/13357, F21Y 101/02

(54) **LIGHT-EMITTING ELEMENT, ILLUMINATION DEVICE, AND LIQUID CRYSTAL DISPLAY DEVICE**

(30) Priority: 07.03.2008 JP 2008058613
(71) Applicant: Sharp Kabushiki Kaisha, Osaka-shi, Osaka 545-8522 (JP)
(72) Inventor: KOHTOKU, Yukihide, Osaka 545-8522 (JP); MASUDA, Takeshi, Osaka 545-8522 (JP); AJICHI, Yuhsaku, Osaka 545-8522 (JP)
(74) Representative: Müller-Boré & Partner Patentanwälte
(86) International application number: PCT/JP2008/071250
(87) International publication number: WO 2009/110145

(57) **Abstract**

A light-emitting element (11) of the present invention includes: a light source (5a); a light guide (7) having a light-emitting surface (7a); and a maintaining section (10), the light source (5a) having directivity which causes components of the light travel in a first direction, which is parallel to the light-emitting surface (7a), to be more than those in a direction perpendicular to the light-emitting surface (7a), the light guide (7) having a light-receiving surface for receiving the components of the light traveling in the first direction, the maintaining section (10) being provided in a first region, indicative of a lowest level of luminance, on the light-emitting surface (7a) in a case where luminance over the light-emitting surface (7) is divided into a plurality of levels between a low luminance and a high luminance. This makes it possible to produce a light-emitting element and an illumination device each of which has improved uniformity of the luminance over the light-emitting surface.

## Description

### Technical Field

The present invention relates to (i) a light-emitting element which transforms a dot-shaped light source or a linear light source into a planar light source by guiding light from the dot-shaped light source or the linear light source to a light-emitting surface, (ii) an illumination device including the light-emitting element and used, for example, as a backlight device of a liquid crystal display device, and (iii) a liquid crystal display device including the illumination device.

### Background Art

In recent years, liquid crystal display devices have become popular rapidly in place of cathode ray tube (CRT) based display devices. The liquid crystal display devices have been in widespread use in, e.g., liquid crystal televisions, monitors, and mobile phones, all of which take advantage of such features of the liquid crystal display devices as energy saving and being thin and light. One way to further take advantage of such features is to make improvements to an illumination device (i.e., so-called backlight device) which is provided in the back of a liquid crystal display device.

Illumination devices are roughly classified into two types: a side-light type (also referred to as an edge-light type) and a direct type. A side-light type illumination device is configured such that a light guide is provided behind of a liquid crystal display panel and that a light source is provided at a lateral edge of the light guide. Light emitted from the light source is reflected in the light guide, and thus irradiates the liquid crystal display panel indirectly and uniformly. This configuration makes it possible to produce an illumination device which, although low in luminance, has a reduced thickness and an excellent luminance uniformity. Side-light type illumination devices are thus used mainly in small- to mid-size liquid crystal displays in such devices as mobile phones and laptop personal computers.

Patent Literature 1 discloses an example of the side-light type illumination devices. Specifically, Patent Literature 1 discloses a surface-emitting device in which a light guide plate is so provided with a plurality of dots formed on its reflecting surface as to enable uniform light emission from a light-emitting surface. In this surface-emitting device, light is not transmitted to corner parts of the reflecting surface due to directivity of a light source. Thus, the corner parts of the reflecting surface are dark. In order to deal with this, the corner parts have a high dot density as compared to other sections.

A direct type illumination device is so provided with a plurality of light sources aligned behind a liquid crystal display panel as to directly irradiate the liquid crystal display panel. Thus, a direct type illumination device can easily achieve high luminance even in a case where a screen is large. On this account, direct type illumination devices are used mainly in large liquid crystal displays measuring 20 inches or more. However, direct type illumination devices that are currently available have a thickness of as much as approximately 20 mm to approximately 40 mm. This prevents a further reduction in the thickness of the displays.

Such a further reduction in the thickness of a large liquid crystal display can be achieved by reducing a distance between (i) the light sources and (ii) the liquid crystal display panel. In this case, however, it is impossible to achieve uniformity of luminance of the illumination device without increasing the number of light sources. Increasing the number of light sources, at the same time, results in an increased cost. This gives rise to a need for developing, without increasing the number of light sources, an illumination device which has a reduced thickness and an excellent luminance uniformity.

### Citation list

Patent Literature 1 Japanese Patent Application Publication, Tokukai, No. 2003-43266 A (Publication Date: February 13, 2003)
Patent Literature 2 Japanese Patent Application Publication, Tokukai, No. 2006-302687 A (Publication Date: November 2, 2006)
Patent Literature 3 Japanese Patent Application Publication, Tokukaihei, No. 11-288611 A (Publication Date: October 19, 1999)

### Summary of Invention

In order to solve the above problem, attempts to reduce the thickness of large liquid crystal displays have been made by including, e.g., a rod-shaped light source having no directivity.

For example, Patent Literature 2 discloses a planar illumination device including: a light guide having a depression in a bottom surface located opposite from a light-emitting surface; and a light source contained in the depression. According to the planar illumination device, the depression has a cross section in the shape of a triangle or the like so that relative luminance at a central portion of the depression is low. This is intended to achieve uniformity of luminance over the light-emitting surface. However, light emitted from the light source contains a large number of components which are perpendicular to the light-emitting surface. Thus, changing the shape of the depression to reduce an amount of light emitted directly above the light source cannot be a definite solution. A portion of the light-emitting surface, the portion being located directly above the light source, will still have a luminance higher than a luminance of any other portion. This unfortunately prevents achievement of uniformity of the luminance.

The planar illumination device disclosed in Patent Literature 2 includes (i) a recess formed in a region of the light-emitting surface of the light guide in which region luminance unevenness occurs, and (ii) a protruding section formed on the light-emitting surface of the light guide. This allows a gap to be maintained between the light guide and, for example, a diffusing plate, or an optical film. Providing the gap causes components of light emitted from the light guide to travel in multiple directions while overlapping one another before reaching the diffusing plate or the optical film. This makes it possible to (i) average the light to be emitted onto the diffusing plate or the optical film, and consequently to (ii) reduce the above-described luminance non-uniformity.

The protruding section is, however, provided for a mere purpose of maintaining the distance between the light guide and the diffusing plate or the optical film. The protruding section is thus provided at a random position. This leads to the following problem: Light emitted from the light-emitting surface of the light guide is reflected by the protruding section. This causes unevenness in the luminance, and results in non-uniform light emission. A display device including such an illumination device as a backlight device will unfortunately have a low display quality.

The present invention has been accomplished in view of the above problem. It is an object of the present invention to provide a light-emitting element and an illumination device each of which has a further improved uniformity of luminance over a light-emitting surface, and thereby to provide a liquid crystal display device having an improved display quality.

In order to solve the above problem, a light-emitting element of the present invention includes: a first light source; a light guide having a light-emitting surface via which light from the first light source is emitted; and a first protruding section provided so as to protrude from the light-emitting surface, the first light source having directivity which causes components of the light traveling in a first direction, which is parallel to the light-emitting surface, to be more than those in a direction perpendicular to the light-emitting surface, the light guide at least having a first light-receiving surface for receiving the components of the light traveling in the first direction, and the first protruding section being provided in a first region, indicative of a lowest level of luminance, on the light-emitting surface, in a case where luminance over the light-emitting surface is divided into a plurality of levels between a low luminance and a high luminance.

According to the above arrangement, the first light source is directive so that more components of the light travel in the first direction, which is parallel to the light-emitting surface, than in the direction perpendicular to the light-emitting surface, and the light guide at least has the first light-receiving surface for receiving the components of the light traveling in the first direction. As such, the light guide receives light having many components traveling in the first direction so that the light is repeatedly reflected and diffused in the light guide before the light is emitted from the light-emitting surface.

This reduces an amount of light which is directly incident from the first light source onto the light-emitting surface and which is then directly emitted from the light-emitting surface. In other words, the combination of the first light source and the light guide prevents luminance unevenness which would otherwise be caused by a region in which the first light source is provided and which would thus be brighter than other regions.

In a case where the optical sheet, for example, is placed over the light-emitting surface, the first protruding section serves to form a gap, having a predetermined distance, between the light-emitting surface and a lower surface of the optical sheet. Providing the gap causes components of light emitted from the light guide to travel across the gap in multiple directions while overlapping one another before reaching the optical sheet. This makes it possible to average the light to be received by the optical sheet, and consequently to improve luminance uniformity.

The first protruding section serving the above function is provided in a region of the light-emitting surface of the light guide, the region having the lowest luminance. The lowest-luminance region of the light-emitting surface can be determined as follows: A luminance distribution over the light-emitting surface is measured. The luminance over the light-emitting surface is divided into a plurality of levels between a low luminance and a high luminance. The lowest level among the plurality of levels is then identified.

The luminance may be divided into a plurality of levels in any manner. Thus, the luminance may be divided into two levels, namely a low luminance level and a high luminance level, or may alternatively be divided into more than two levels. It is simply necessary to identify a region having a relatively low luminance. Consequently, providing the first protruding section of the present invention in such a region achieves an object of the present invention, i.e., a reduction in an influence by the first protruding section on the luminance distribution over the light-emitting surface.

The first protruding section is provided in the region having the lowest luminance. This reduces a proportion of light emitted from the light-emitting surface, the proportion being reflected by the first protruding section. In other words, it is possible to minimize the influence by the first protruding section on the luminance distribution over the light-emitting surface. This in turn makes it possible to prevent luminance unevenness from occurring due to protrusion of the first protruding section from the light-emitting surface, and consequently to further improve luminance uniformity as compared to conventional arrangements.

The light-emitting element of the present invention may further include: a second light source having directivity which causes components of light travel in a second direction, which is parallel to the light-emitting surface, to be more than those in the direction perpendicular to the light-emitting surface, the light guide having a second light-receiving surface for receiving, from the second light source, the components of the light traveling in the second direction, and the first direction differing from the second direction.

According to the above arrangement, the light-emitting element further includes the second light source having a light-emitting direction different from that of the first light source. This allows light to be transmitted throughout the entire light guide. Thus, the use of this light-emitting element allows for achievement of excellent luminance uniformity even in a case where the light-emitting surface has a large area.

In a case where the light guide is symmetrical, the first light source and the second light source are preferably disposed so as to face each other so that the first direction is opposite from the second direction. This enables the second light source to irradiate, in a complementary manner, a region of the light-emitting surface which region is irradiated by the first light source and has a relatively low luminance. This in turn facilitates improving luminance uniformity.

The light-emitting element of the present invention may further include: a second protruding section provided so as to protrude from the light-emitting surface, the second protruding section being provided in a second region, indicative of the lowest level of luminance, on the light-emitting surface and in a vicinity of the second light source.

Even in the case where the light-emitting element includes the second light source, it is not necessary to provide the second protruding section corresponding to the second light source. However, if provided, the second protruding section is preferably provided, in order to maintain luminance uniformity, similarly to the first protruding section, i.e., in the second region located in the vicinity of the second light source and indicating the lowest level.

In a case where a plurality of the first protruding section or the second protruding section are provided, a number of the plurality may be determined by balancing (i) necessity of maintaining the distance of the gap against (ii) degree of luminance unevenness occurring due to the provision of the plurality of the first protruding section or the second protruding section.

The light-emitting element of the present invention may be arranged such that each of the first light-receiving surface and the second light-receiving surface constitutes an inner wall of a recess formed in a bottom surface of the light guide.

According to the above arrangement, each of the first light-receiving surface and the second light-receiving surface constitutes the surface of a recess formed in the bottom surface of the light guide. This indicates that it is possible to achieve a design in which each of the first light source and the second light source is contained in a recess. This makes it possible to secure, inside the light guide, a space for containing each of the first light source and the second light source. As a result, it is possible to reduce the thickness of the light-emitting element, and to downsize the light-emitting element.

Further, in a case where a plurality of the light-emitting element are combined so as to constitute a large illumination device, the first light source and the second light source can be contained in each light-emitting element. This allows light sources to be provided both in a central portion of a large light-emitting surface of the illumination device and in a portion surrounding the central portion. As a result, it is possible to improve luminance entirely over the large light-emitting surface.

The light-emitting element of the present invention may further include: an optical sheet for diffusing the light emitted from the light-emitting surface, the optical sheet being provided so as to face the light-emitting surface at a distance maintained by the first protruding section and the second protruding section.

With this arrangement, the gap having a predetermined distance and formed between the light-emitting surface and the lower surface of the optical sheet causes an amount of light to be received by the optical sheet to be averaged, and further the light is diffused by the optical sheet. As such, the light-emitting element can emit, to an object to be irradiated, light having a sufficiently uniform luminance.

A light-emitting element of the present invention includes: a first light source; a light guide having a light-emitting surface via which light from the first light source is emitted; an optical sheet having a first protruding section protruding toward the light-emitting surface, and having a function of diffusing the light emitted from the light-emitting surface, the first protruding section being provided so as to maintain a predetermined distance with respect to the light-emitting surface; the first light source having directivity which causes components of the light traveling in a first direction, which is parallel to the light-emitting surface, to be more than those in a direction perpendicular to the light-emitting surface, the light guide at least having a first light-receiving surface for receiving the components of the light traveling in the first direction, and the first protruding section being positioned in a first region of the optical sheet, the first protruding section being provided in a first region, indicative of a lowest level, on the optical sheet, in a case where luminance over the light-emitting surface is divided into a plurality of levels between a low luminance and a high luminance.

According to the above arrangement, the first protruding section is provided not on the light guide, but on the optical sheet provided above the light guide. However, a region of the light-emitting surface toward which region the first protruding section protrudes is the above-described first region indicating the lowest level. As such, it is possible to achieve an operational advantage similar to the operational advantage described above.

In order to minimize an influence on luminance, the first protruding section protruding from the optical sheet toward the light-emitting surface preferably has a shape of a circular cone or a pyramid. This is because the first protruding section contacts the light-emitting surface by its tip, and an area of the contact is minimal in the case where the first protruding section has the above shape.

The light-emitting element of the present invention may be arranged such that the light guide has a bottom surface which faces the light-emitting surface; and projections and depressions, having a distribution density which varies according to a position on the light-emitting surface or the bottom surface, are provided in at least one of the light-emitting surface and the bottom surface so as to achieve uniformity of luminance of the light emitted from the light-emitting surface.

The asperities formed according to the above arrangement on at least one of the light-emitting surface and the bottom surface serve to diffuse light for uniformity of luminance of the light emitted from the light-emitting surface. To increase the diffusing effect, the asperities are preferably distributed not at a uniform density over a surface on which the asperities are formed, but at a density which varies according to the luminance distribution over the surface on which the asperities are formed.

The asperities are desirably provided, for example, in a large number in a region having a relatively low luminance, and in a small number in a region having a relatively high luminance.

The light-emitting element of the present invention may preferably be arranged such that the optical sheet facing the light-emitting surface has a lower surface on which projections and depressions, having a distribution density which varies according to a position on the lower surface, are provided so as to achieve uniformity of luminance of light emitted from the optical sheet.

The light-emitting element of the present invention may further include: a transparent plate, wherein the first protruding section is formed integrally with the transparent plate.

According to the above arrangement, the transparent plate is provided on the light-emitting surface or on the lower surface of the optical sheet, and the first protruding section protrudes from the transparent plate. Providing such a transparent plate prevents the light guide or the optical sheet from being bent by, e.g., heat generated by the first light source, and thus improves flatness of the light-emitting surface or the lower surface of the optical sheet. This makes it possible to reliably maintain a constant distance between the light-emitting surface and the lower surface of the optical sheet, and thus to maintain a constant distance of the gap formed between the light-emitting surface and the lower surface of the optical sheet. As a result, it is possible to reliably average the amount of light to be received by the optical sheet, and thus to improve luminance uniformity.

The light-emitting element of the present invention may be arranged such that the transparent plate has a roughened surface which is opposite to a surface on which the first protruding section is formed.

A normal illumination device includes a plurality of arranged light guides so as to form a large light-emitting surface. Thus, it is difficult to form a flush light-emitting surface. In addition, the optical sheet and the transparent plate, both of which face the light-emitting surface, are each constituted by a single sheet, unlike the light guides. Thus, the optical sheet and the transparent plate are flexed. Consequently, a surface of the transparent plate is separated from the flush surface (light-emitting surface) formed by the light guides or from the surface of the optical sheet by a non-uniform distance, and is thus in partial contact with or close to the surface. This leads to interference fringes (Newton's rings) occurring in the vicinity of a portion at which the surface of the transparent plate is in contact with or close to the flush surface formed by the light guides or the surface of the optical sheet. Such interference fringes are thus observed as luminance unevenness.

In view of this, the transparent plate according to the above arrangement has a roughened surface (e.g., provided with fine asperities). Thus, an air layer formed (i) between the surface of the transparent plate and the light-emitting surface of the light guide or (ii) between the surface of the transparent plate and the surface of the diffusing plate is numerously and finely varied in thickness. This reduces pitches of the interference fringes, and thus allows the interference fringes to be averaged over an entire display screen. As a result, such interference fringes are not easily visible as luminance unevenness, thereby further improving luminance uniformity.

The light-emitting element of the present invention may be arranged such that the light guide has a thickness which is smaller as it is farther away from the first light source in the first direction.

According to the above arrangement, total reflection conditions will no longer satisfy Snell's law during the process in which light emitted from a light source travels through the light guide in the first direction. Consequently, as compared to the case in which the light guide has a uniform thickness, the above arrangement makes it possible to reduce an amount of light emitted to the outside from an end surface of the light guide, the end surface being located far from the light source in the first direction, and thus to prevent loss of light. As a result, it is possible to improve efficiency in emitting light from the light-emitting surface.

The improvement in the light-emission efficiency prevents light to be received from a light source from decreasing in amount even at a position on the light-emitting surface which position is far from the light source, and thus allows the light-emitting element to emit light at such a far position which light has an amount substantially equal to that of light emitted at a position close to the light source. As a result, it is possible to improve luminance uniformity. The thickness of the light guide refers to its width extending in a direction perpendicular to the light-emitting surface.

The light-emitting element of the present invention may further include: dimmer means, provided in a bright region on the light-emitting surface, for reducing an amount of incident light, the bright region directly receiving the light emitted from the first light source.

According to the above arrangement, the dimmer means reduces the amount of light (i.e., portion of direct light from the light source which portion travels through the light-emitting surface without being reflected by it) which is directly incident from the light source onto the light-emitting surface. As a result, the light-emitting element has a superior luminance uniformity.

The dimmer means refers to any means usable, for example, to partially block light emission or partially reflect light so as to reduce the amount of light emitted from the bright region. The dimmer means may be a member separate from the light guide, or may be realized by varying a shape of the light-emitting surface of the light guide, e.g., by forming a slope in the bright region.

The light-emitting element of the present invention may preferably be arranged such that at least one of the first protruding section and the second protruding section is made of a material having a property of transmitting light and a property of diffusing light.

According to the above arrangement, the first protruding section and/or the second protruding section is/are made of a material having a property of transmitting light and a property of diffusing light. This makes it possible to reduce an amount of light blocked or reflected by the first protruding section and/or the second protruding section, and also to diffuse light by the first protruding section and/or the second protruding section. The first protruding section and/or the second protruding section thus do(es) not prevent traveling of light emitted from the light-emitting surface and diffuse(s) such light. As a result, it is possible to prevent a decrease in luminance and in uniformity of the luminance.

An illumination device including any one of the above light-emitting elements is capable of emitting, via the light-emitting surface, to an object to be irradiated, light having an excellent luminance uniformity.

In a case where the illumination device is constituted by a combination of a plurality of any one of the above the light-emitting elements, it is possible to provide an excellent illumination device which includes a large light-emitting surface and which at the same time emits, to an object to be irradiated, light having an excellent luminance uniformity.

Assuming that the light-emitting element has the first light-receiving surface and the second light-receiving surface, each of which constitutes in the surface of a recess formed in the bottom surface of the light guide, and that a plurality of the light-emitting element are combined to be included in an illumination device, each light guide, in this particular case, contains light sources, and a plurality of light sources are provided so as to be distributed entirely over a large light-emitting surface of the illumination device. This makes it possible to provide an illumination device which has a large light-emitting surface and which at the same time has a reduced thickness, and in which heat generated by the light sources is prevented from becoming intense at a particular position as in conventional side-light type illumination devices. Since, according to the illumination device, such heat generated by the light sources is not intense at a particular position, it is possible to simplify a heat dissipation mechanism, and thus to prevent a cost increase arising from the heat dissipation mechanism.

In a case where the illumination device includes a drive section for independently driving the plurality of the light-emitting elements, emission intensity can be varied for each light-emitting element. Thus, including the illumination device of the present invention in a liquid crystal display device as, e.g., a backlight device allows intensity of the backlighting to be varied according to regions into which an entire display screen is divided. The drive section actively adjusts the amount of light from each light-emitting element for each display image so as to, for example, decrease the light intensity in a region in which a dark image is displayed, and so as to increase the light intensity in a region in which a bright image is displayed. This allows images to be displayed with higher contrast.

A sensor is preferably provided inside the light guide.

The sensor thus feeds its obtained result to the drive section so that the drive section adjusts the amount of light on the basis of the result. This makes it possible to reduce an individual difference in amount of light between the light sources. As a result, it is possible to improve uniformity of luminance over the entire light-emitting surface of the illumination device.

A liquid crystal display device of the present invention includes as a backlight device: any one of the above light-emitting elements; or any one of the illumination devices.

This makes it possible to provide a liquid crystal display device which has a sufficient luminance and an excellent uniformity of the luminance even in a case where the liquid crystal display device has a reduced thickness and a large size.

Additional objects, features, and strengths of the present invention will be made clear by the description below. Further, the advantages of the present invention will be evident from the following explanation in reference to the drawings.

### Brief Description of Drawings

Fig. 1
   (a) is a plan view illustrating a light-emitting element in accordance with an embodiment of the present invention, (b) is a cross-sectional view taken along arrows A-A of (a), and (c) is a view illustrating a bottom surface of the light-emitting element.
Fig. 2

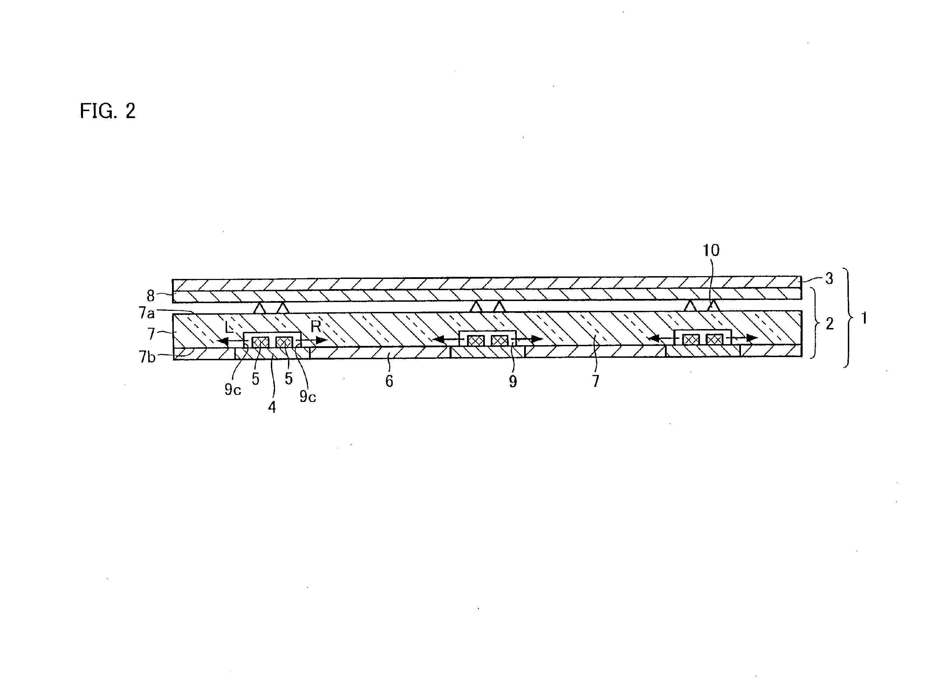

   Fig. 2 is a cross-sectional view schematically illustrating an arrangement of a liquid crystal display device of the present invention.
Fig. 3

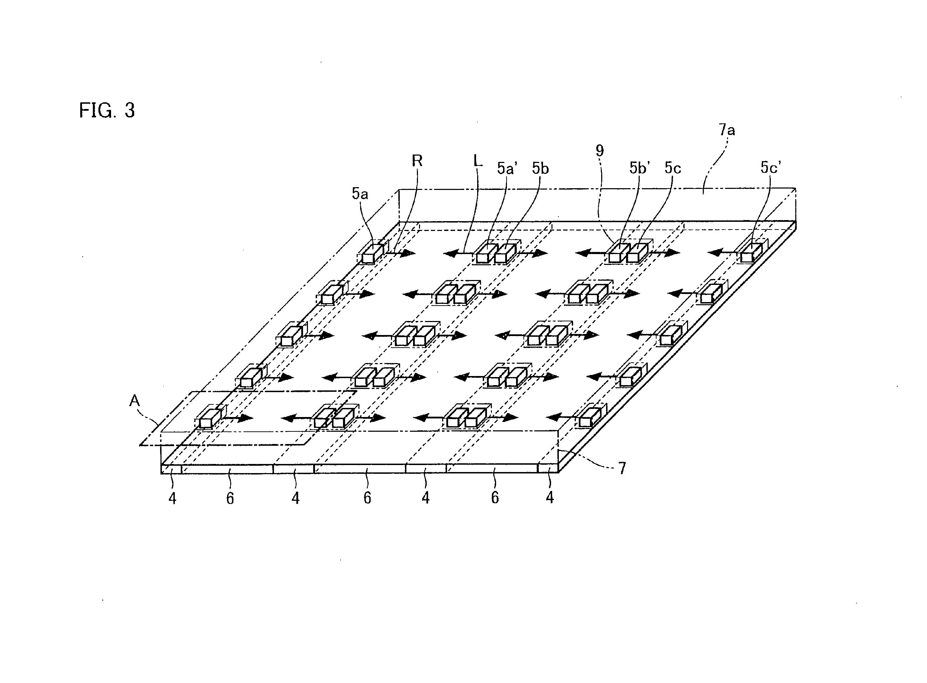

   Fig. 3 is a perspective view illustrating a backlight device in accordance with the embodiment of the present invention, and taken from a light-emitting surface side.
Fig. 4

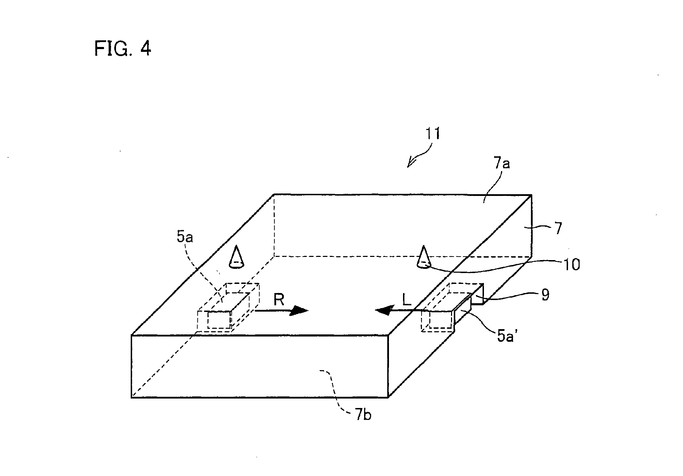

   Fig. 4 is a perspective view illustrating a light-emitting element serving as a part of the backlight device.
Fig. 5

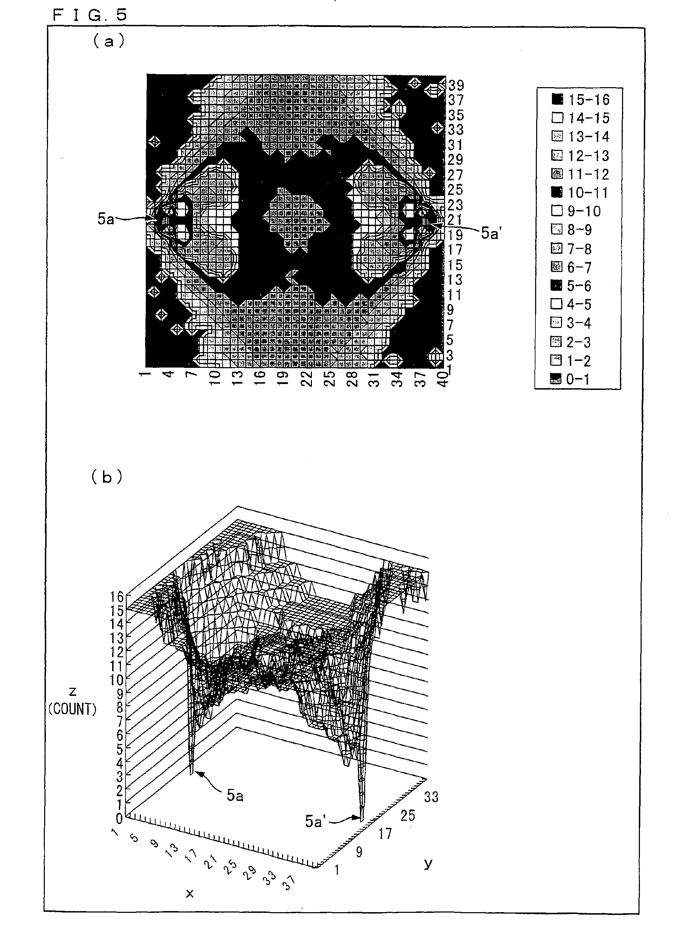

   Fig. 5 shows graphs illustrating an example distribution of density of asperities formed by texturing on the surface (light-emitting surface) of the light-emitting element illustrated in Fig. 4, wherein (a) is a graph expressing the texture density in terms of hues, and (b) is a graph expressing the texture density in terms of height.
Fig. 6

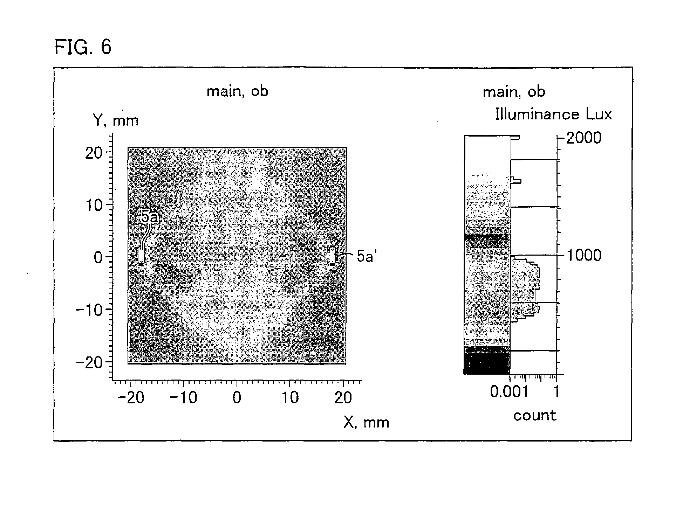

   Fig. 6 shows graphs illustrating an illuminance distribution of the light-emitting element having the texture density illustrated in Fig. 5.
Fig. 7

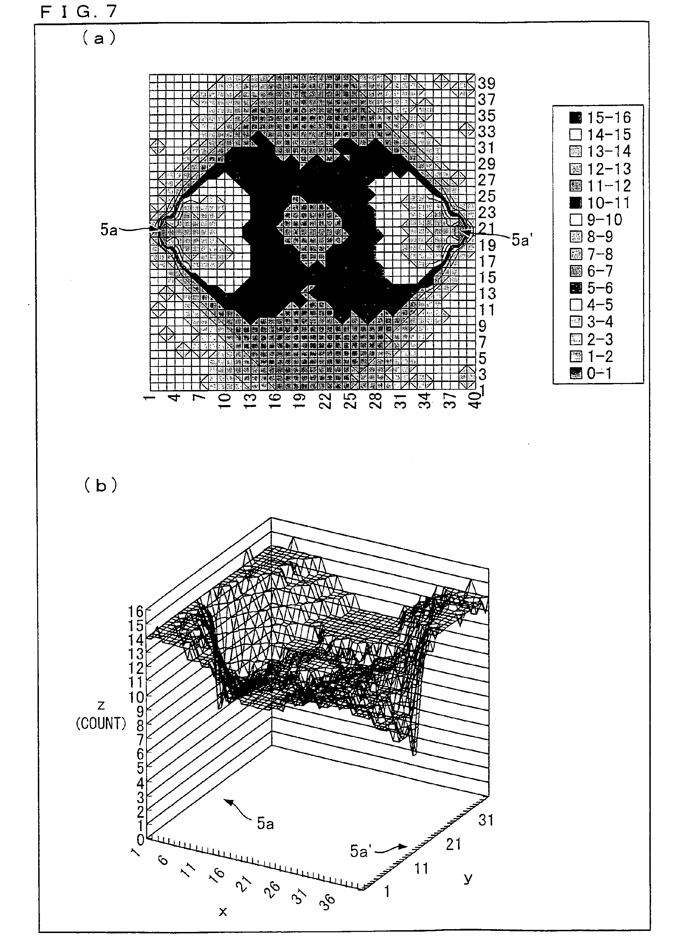

   Fig. 7 shows graphs illustrating another example distribution of density of asperities formed by texturing on the surface (light-emitting surface) of the light-emitting element illustrated in Fig. 4, wherein (a) is a graph expressing the texture density in terms of hues, and (b) is a graph expressing the texture density in terms of height.
Fig. 8

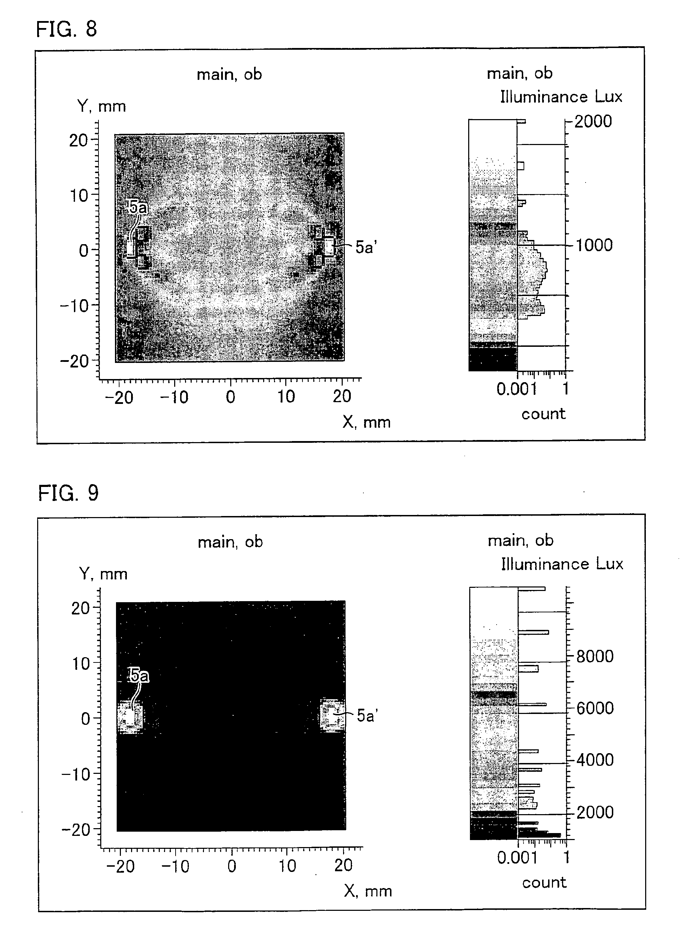

   Fig. 8 shows graphs illustrating an illuminance distribution of the light-emitting element having the texture density illustrated in Fig. 7.
Fig. 9
   Fig. 9 shows graphs illustrating an illuminance distribution of a light-emitting element having a uniform texture density over its light-emitting surface.
Fig. 10

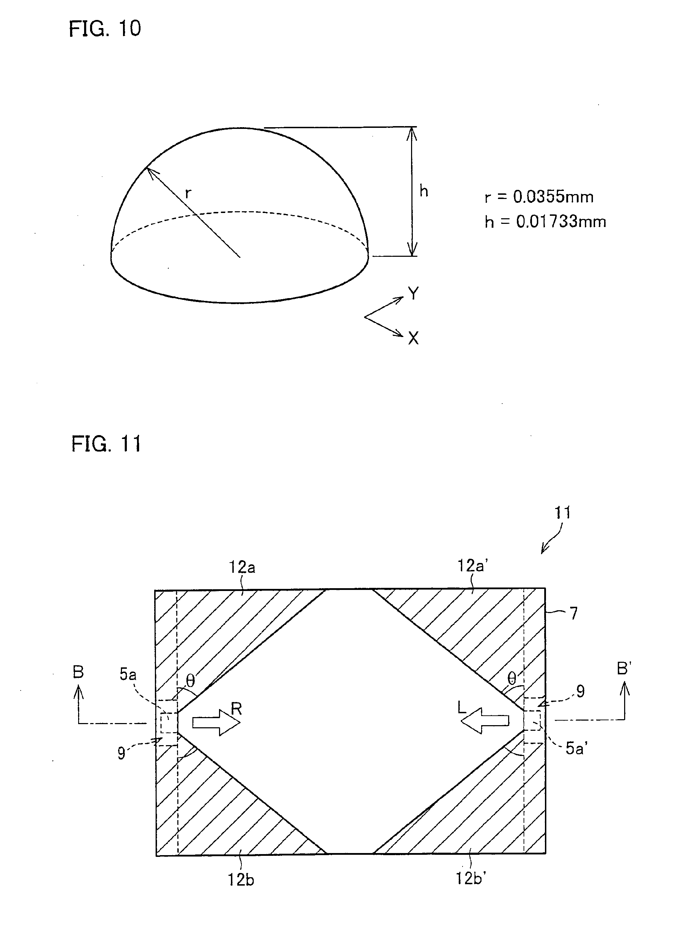

   Fig. 10 is a perspective view illustrating an example shape of a protruding section formed on the light-emitting surface.
Fig. 11
   Fig. 11 is a plan view illustrating a light guide and schematically indicating an irradiation region of each light source.
Fig. 12

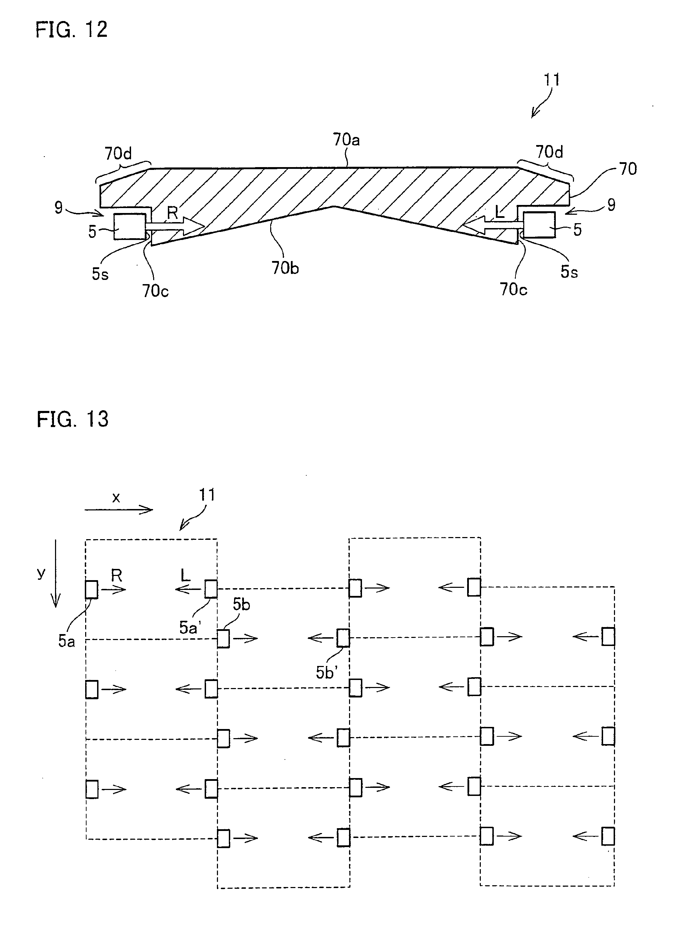

   Fig. 12 is a cross-sectional view illustrating a light guide as a modification and taken along line B-B' of Fig. 11.
Fig. 13
   Fig. 13 is a plan view illustrating an example of how light-emitting elements are combined.
Fig. 14

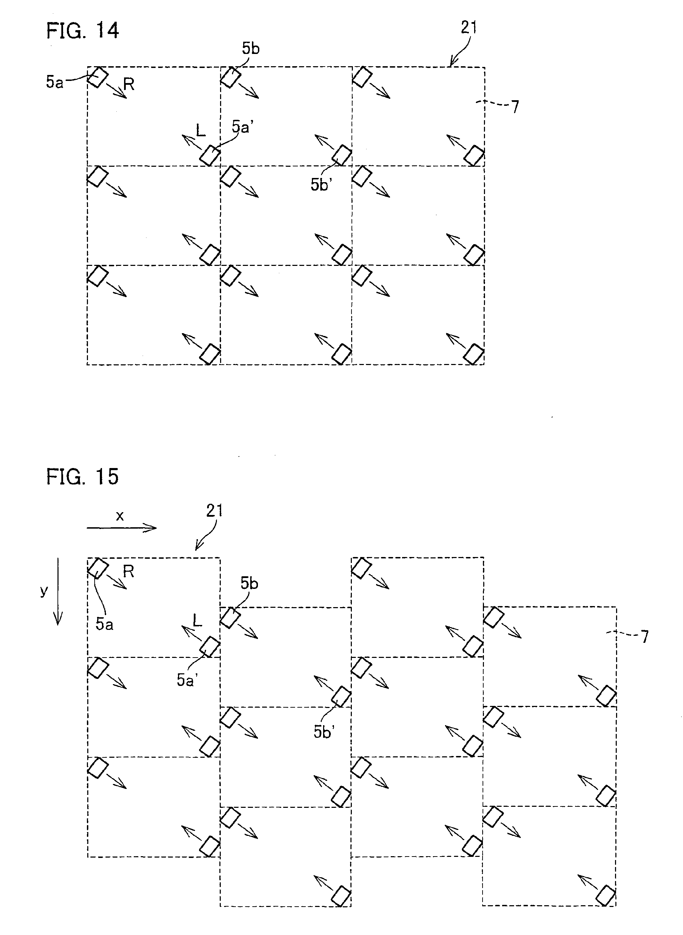

   Fig. 14 is a plan view illustrating another example of how the light-emitting elements are combined.
Fig. 15
   Fig. 15 is a plan view illustrating still another example of how the light-emitting elements are combined.
Fig. 16

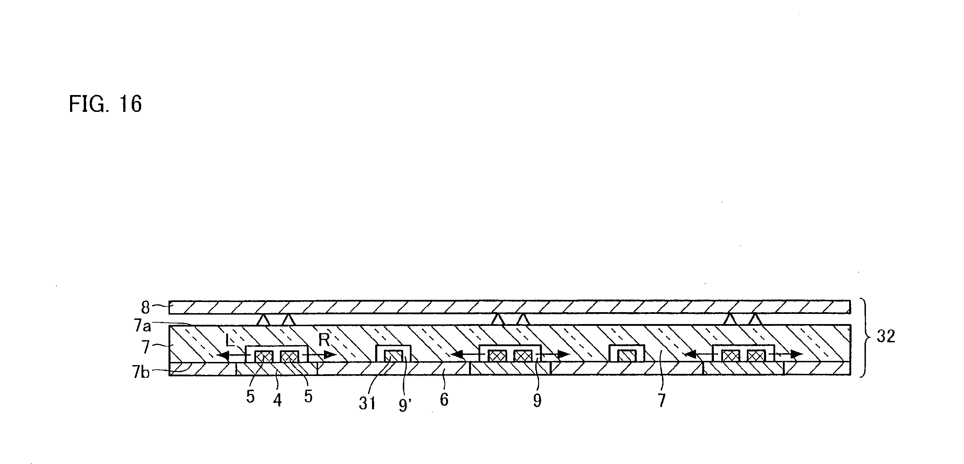

   Fig. 16 is a cross-sectional view schematically illustrating an arrangement of a backlight device containing sensors.
Fig. 17

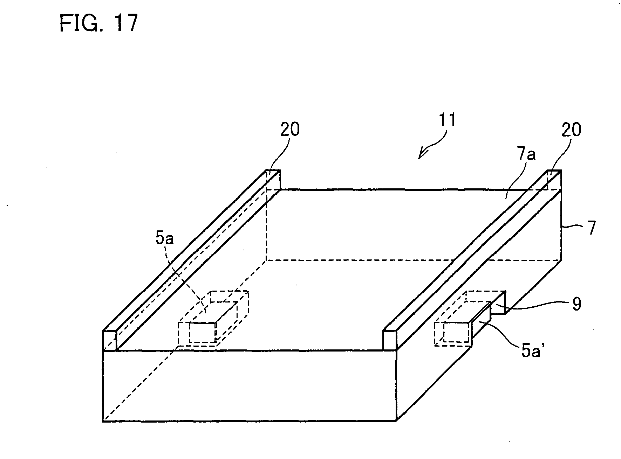

   Fig. 17 is a perspective view illustrating a modification of maintaining sections.
Fig. 18

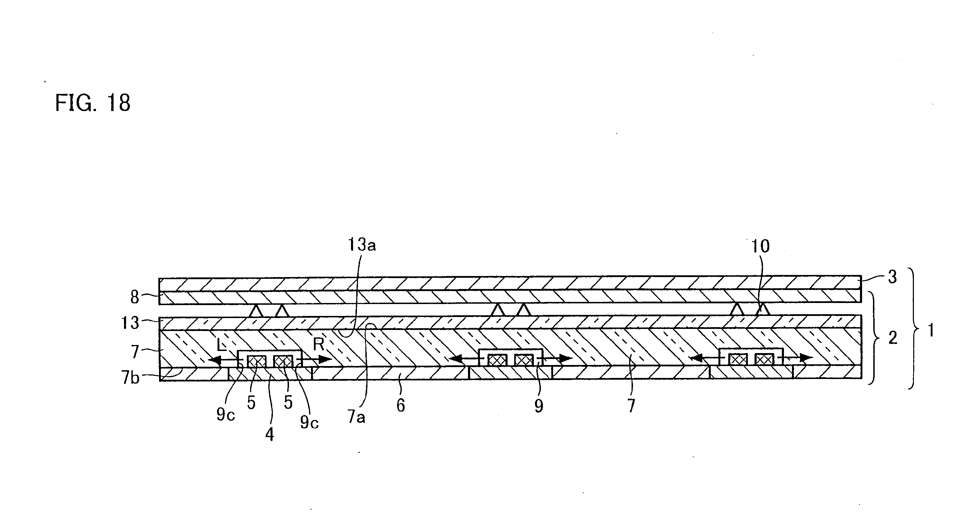

   Fig. 18 is a cross-sectional view schematically illustrating an arrangement of a liquid crystal display device in accordance with another embodiment of the present invention, the liquid crystal display device including a backlight device which includes a transparent plate having the maintaining sections formed thereon and provided on the light-emitting surface of the light guide.
Fig. 19

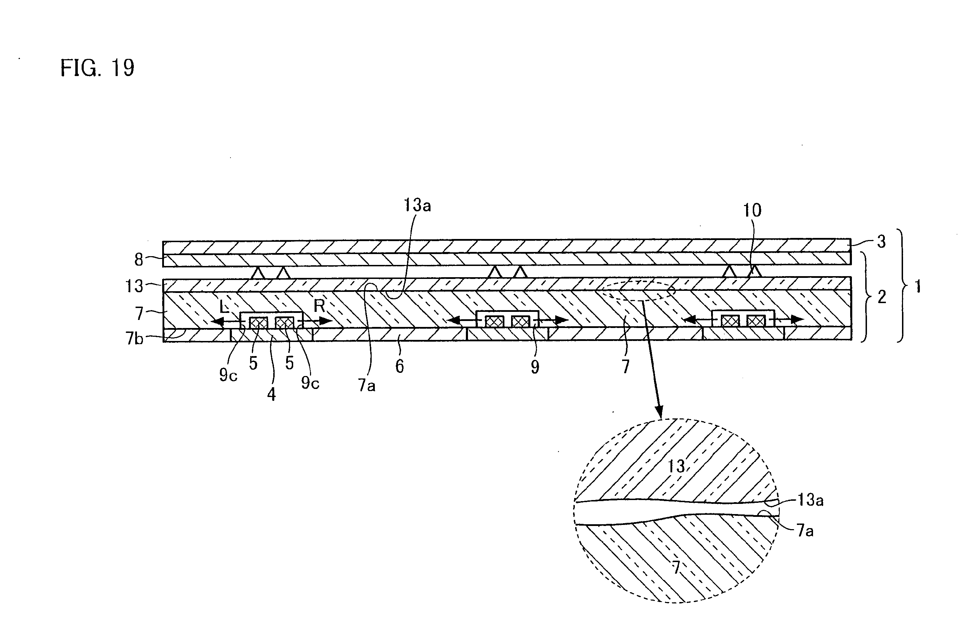

   Fig. 19 is a cross-sectional view illustrating a state in which a lower surface of the transparent plate is partially close to the light-emitting surface.
Fig. 20

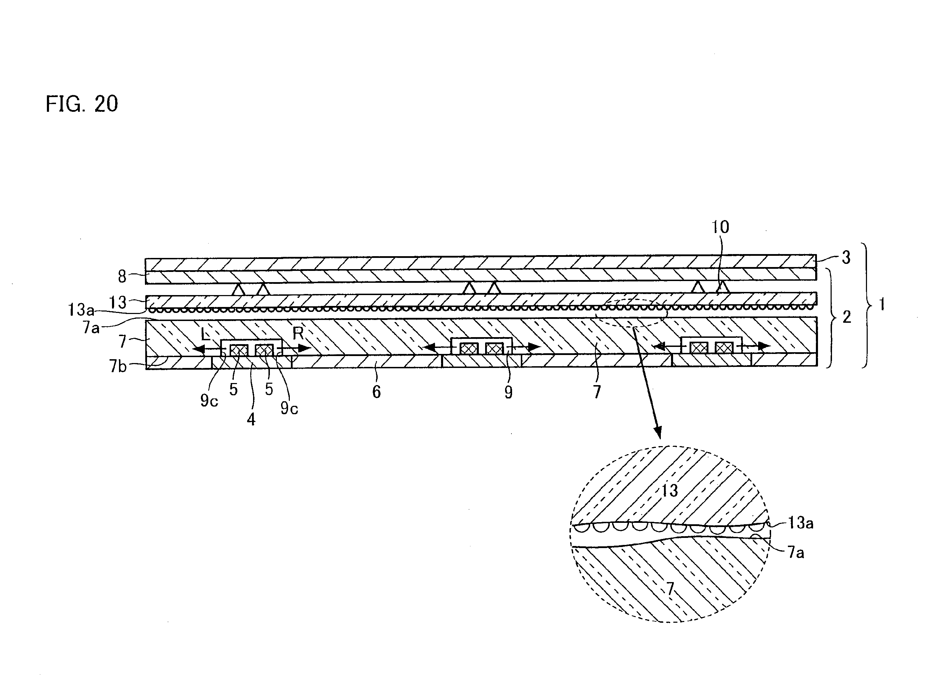

   Fig. 20 is a cross-sectional view schematically illustrating a state in which the lower surface of the transparent plate has been roughened.
Fig. 21

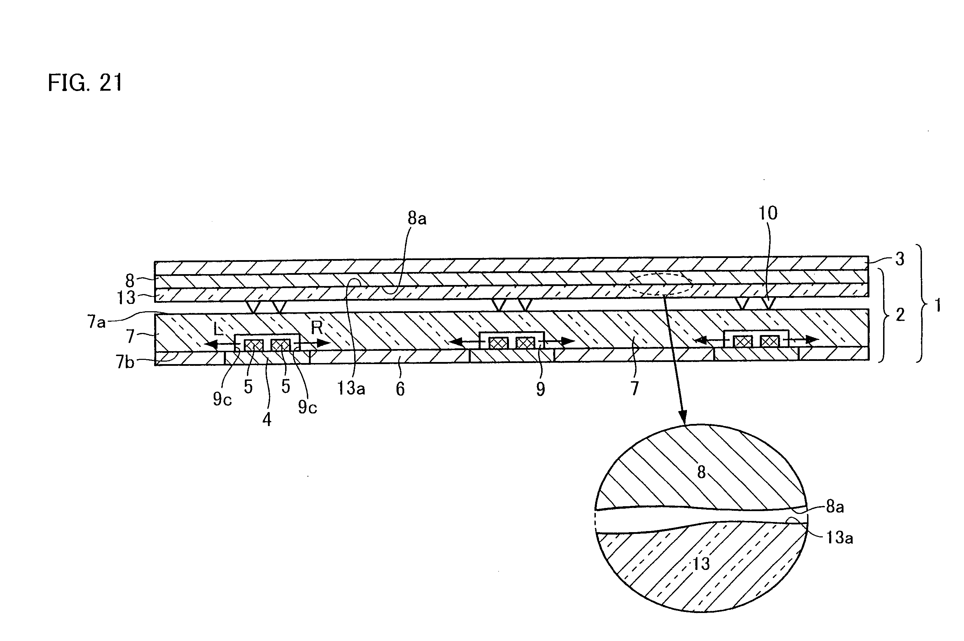

   Fig. 21 is a cross-sectional view schematically illustrating an arrangement of a liquid crystal display device in accordance with still another embodiment of the present invention, the liquid crystal display device including a backlight device which includes a transparent plate having the maintaining sections formed thereon and provided on the lower surface of the optical sheet.
Fig. 22

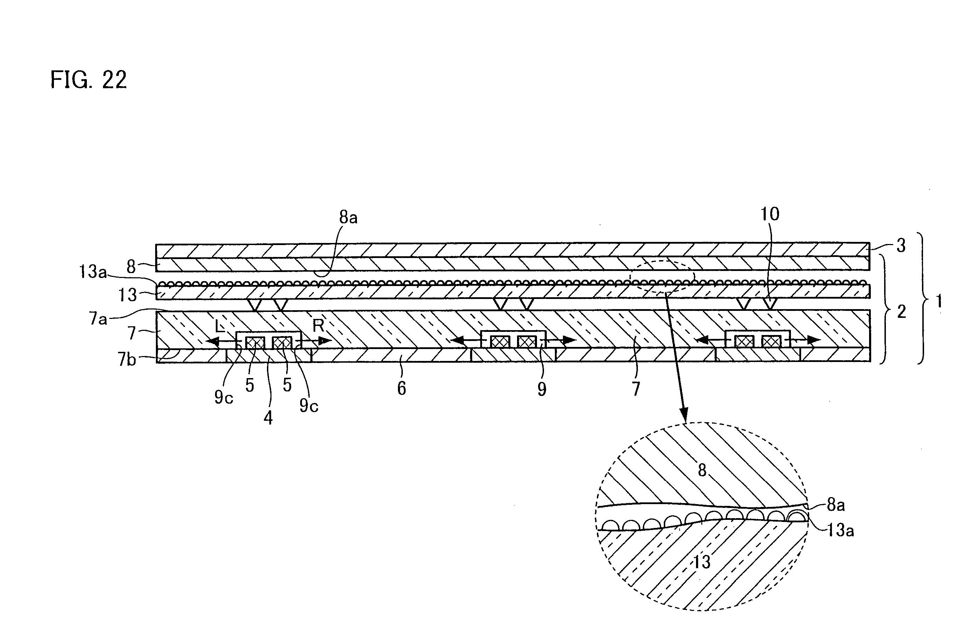

   Fig. 22 is a cross-sectional view schematically illustrating a state in which the transparent plate has a roughened surface opposite from a surface on which the maintaining sections are formed.

### Reference Signs List

- 1: liquid crystal display device
- 2: backlight device (illumination device)
- 3: liquid crystal display panel
- 5: light source
- 5a, 5a': light source (first light source; second light source)
- 5b, 5b': light source (first light source; second light source)
- 5c, 5c': light source (first light source; second light source)
- 7a: light-emitting surface (of a light guide)
- 7b: back surface (bottom surface) (of a light guide)
- 8: optical sheet
- 8a: lower surface (of the optical sheet)
- 9: recess
- 9c: light-receiving surface (first light-receiving surface; second light-receiving surface)
- 10: maintaining section (first protruding section; second protruding section)
- 11: light-emitting element
- 13: transparent plate
- 13a: surface (of the transparent plate; surface located opposite from a surface on which protruding sections are formed)
- 21: light-emitting element
- 31: photodiode (sensor)
- 32: backlight device (illumination device)
- 70: light guide
- 70a: light-emitting surface
- 70d: taper part (dimmer means)

### Description of Embodiments

With reference to the drawings, the following description deals in detail with embodiments of the present invention by way of example. Note that dimensions, materials, shapes, relative arrangements and the like of constituent members described in the embodiments are not intended to limit the scope of the present invention unless otherwise specified, and are therefore merely illustrative examples.

A light-emitting element described in the present embodiment can be a constituent member of a planar light source having a light-emitting surface which requires uniform light amount. The planar light source can, for example, be a constituent member of an illumination device employed as a backlight device for a liquid crystal display device.

### [Embodiment 1: Case in which maintaining sections are provided on a light-emitting surface of a light guide]

### <Cross-sectional Arrangement of Liquid Crystal Display Device>

Fig. 2 is a cross-sectional view schematically illustrating an arrangement of a liquid crystal display device 1 in accordance with an embodiment of the present invention. The liquid crystal display device 1 includes: a backlight device 2 (illumination device); and a liquid crystal display panel 3 provided so as to face the backlight device 2.

The backlight device 2 is provided behind the liquid crystal display panel 3 (i.e., on a surface side which is opposite to a surface side on which a display surface is located). As illustrated in Fig. 2, the backlight device 2 includes: substrates 4; light sources 5; reflecting sheets 6; a light guide 7; an optical sheet 8; and maintaining sections 10 (first protruding section; second protruding section).

The liquid crystal display panel 3 has an arrangement similar to that of a normal liquid crystal display panel for use in a conventional liquid crystal display device. The liquid crystal display panel 3, for example, includes (although not shown in Fig. 2): an active matrix substrate on which a plurality of thin film transistors (TFTs) are provided; a color filter (CF) substrate provided so as to face the active matrix substrate; and a liquid crystal layer between the two substrates which is sealed with a sealing material.

An arrangement of the backlight device 2 is described below in detail.

A plurality of light sources 5 are provided on the substrates 4, and each of the light sources 5 is, for example, a dot-shaped light source such as a side light-emitting type LED. In a case where the plurality of light sources 5 are constituted by a plurality of side light-emitting type LEDs each of which has an arrangement in which chips of R, G, and B are molded in a single package, it is possible to provide an illumination device capable of a wide-range color reproduction. A reflecting sheet 6 is provided between respective adjacent two of the substrates 4. Note that the substrates 4 are preferably white in order to improve luminance. The light guide 7 is provided so as to cover the plurality of light sources 5.

The light guide 7 has a light-emitting surface 7a, via which light from the light sources 5 is emitted. The light-emitting surface 7a is a surface for emitting light toward an object to be irradiated. The light guide 7 can be made of a transparent resin such as acrylic resin, COP (cycloolefin polymer; e.g., Zeonor (product name)), COC (cycloolefin copolymer), or polycarbonate. However, the material of the light guide is not limited to any of the transparent resin, and can therefore be a material which is in general use as a material for a light guide. The light guide 7 includes hollow recesses 9 which are provided so as to be exposed in a bottom surface of the light guide 7 (i.e., in inner parts of a back surface 7b). Corresponding ones of the plurality of light sources 5 are contained in each of the hollow recesses 9. The light guide 7 can be molded so as to be integral with the maintaining sections 10 (described below) by a molding method such as injection molding or cutting.

The recesses 9 each have a substantially cuboid shape whose one side surface serves as a light-receiving surface 9c via which the light irradiated from a corresponding one of the plurality of light sources 5 is predominantly received (first light-receiving surface; second light-receiving surface).

Each of the reflecting sheets 6 is provided between respective adjacent two of the substrates 4, and also is provided so as to be in contact with the back surface 7b (bottom surface; surface located opposite to the light-emitting surface 7a) of the light guide 7. Each of the reflecting sheets 6 reflects light so as to emit more amount of light from the light-emitting surface 7a.

The optical sheet 8 uniforms and converges light from the light-emitting surface 7a of the light guide 7 to the liquid crystal display panel 3. The optical sheet 8 is provided so as to face the light-emitting surface 7a at a predetermined distance (e.g., 3.0 mm), and as to entirely cover a flush light-emitting surface formed by the light-emitting surface 7a.

The optical sheet 8 can be realized by stacking and appropriately combining members such as (i) a diffusing plate for diffusing the light emitted from the light-emitting surface 7a, (ii) a diffusing sheet for simultaneously converging and diffusing incident light (iii) a lens sheet for converging incident light so as to improve luminance obtained when viewed from a front direction (i.e., a direction pointing from the backlight device 2 to the liquid crystal display panel 3), and (iv) a polarizing and reflecting sheet for reflecting one polarized component of light and transmitting the other polarized component so as to improve luminance of the liquid crystal display device. Note that the members (i) through (iv) are preferably combined in consideration of an intended price and/or performance of the liquid crystal display device.

For example, "SUMIPEX E RMA10" (manufactured by Sumitomo Chemical Co., Ltd.) having a thickness of 2.0 mm can be employed as the diffusing plate. "LIGHT-UP 250GM2" (manufactured by Kimoto Co., Ltd.) can be employed as the diffusing sheet. "Thick RBEF" (manufactured by Sumitomo 3M Ltd.) can be employed as the prism sheet (lens sheet). Further, "DBEF-D400" (manufactured by Sumitomo 3M Ltd.) can be employed as the polarizing sheet (polarizing and reflecting sheet).

The maintaining sections 10 serve as members to maintain a constant distance between the light-emitting surface 7a and the optical sheet 8. Securing a gap, having such a predetermined distance, between the light-emitting surface 7a and the optical sheet 8 causes light emitted from the light guide 7 to travel in multiple directions while overlapping one another before reaching the optical sheet 8. This makes it possible to (i) average the light which is directed toward the optical sheet 8 and (ii) consequently reduce luminance non-uniformity.

The maintaining sections 10 of the present embodiment have a height of 3.0 mm so that the above given distance is set to 3.0 mm.

To prevent the maintaining sections 10 from blocking or reflecting incident light, the maintaining sections 10 of the present embodiment are made of a material which has a property of transmitting light and a property of diffusing light. This allows (i) a reduction in amount of light blocked and reflected by the maintaining sections 10 and (ii) the maintaining sections 10 to diffuse the incident light. The maintaining sections 10 thus diffuse the incident light without preventing traveling of the light which is emitted from the light-emitting surface. As a result, it is possible to prevent a decrease in luminance and a decrease in uniformity of the luminance.

The material which has a property of transmitting light and a property of diffusing light can be prepared, for example, by mixing, in a transparent resin such as acrylic resin or polycarbonate, particles made of a light-scattering material such as titanium oxide or barium sulfate.

The maintaining sections 10 may also be molded so as to be integral with the light guide 7 with use of a transparent resin such as polycarbonate like the light guide 7 and the optical sheet 8. The shape of the maintaining sections 10 is not particularly limited. However, the maintaining sections 10 each preferably have a tapered shape such as a circular cone so as not to block light emitted from the light-emitting surface 7a. Later described is how the maintaining sections 10 are provided on the light-emitting surface 7a.

With the above arrangement, light emitted from the dot-shaped light sources 5 travels through the light guide 7 while it is being subjected to a scattering process and a reflecting process, and is then emitted from the light-emitting surface 7a toward the liquid crystal display panel 3 via the optical sheet 8.

According to the backlight device 2 of the present embodiment, the plurality of light sources 5 are provided inside the light guide 7, unlike a conventional side-light type illumination device in which a light source is provided on an end surface of a light guide. This eliminates the need to secure a frame region in which light sources are provided, and consequently allows a reduction in size of the frame of the liquid crystal display device. Further, the backlight device 2 of the present embodiment is not arranged like a conventional direct type illumination device in which a light source is provided behind a light guide. As such, the backlight device 2 allows a reduction in thickness.

Arrows in Fig. 2 indicate directions in which light is emitted by the individual light sources 5 provided in the backlight device 2. As indicated by the arrows, the light from the light sources 5 has directivity which causes components of the light traveling in a first direction, which is parallel to the light-emitting surface 7a, to be more than those in a direction perpendicular to the light-emitting surface 7a. In other words, the light from each of the side surfaces of the light sources 5 provided on the substrates 4 is emitted predominantly in a direction parallel to the light-emitting surface 7a. One of adjacent two light sources 5 in each of the recesses 9 predominantly emits light in a direction indicated by an arrow L (left), whereas the other predominantly emits light in a direction indicated by an arrow R (right). The two light sources thus emit light in directions different from each other. The plurality of light sources 5 included in the backlight device 2 of the present embodiment thus emit light in at least two directions.

As described above, each of the plurality of light sources 5 has a light-emitting property in which its directivity is in the first direction, i.e., in a direction parallel to the light-emitting surface 7a. This allows a reduction in amount of light which is emitted by each of the plurality of light sources 5 and then directly arrives at the light-emitting surface 7a (i.e., amount of light which is directly emitted from each of the plurality of light sources 5 and then transmits a corresponding light-emitting surface 5a instead of being reflected by the corresponding light-emitting surface 5a). This in turn can prevent regions, in which the plurality of light sources 5 are provided, from being respective bright regions which are brighter than other regions. In addition, each of the adjacent two of the plurality of light sources 5 emits light in a direction different. This allows light to be widespread all over the light guide 7. As a result, it is possible to further improve luminance uniformity as compared to conventional backlight devices.

The plurality of light sources 5 of the present invention not necessarily emit light whose predominant component travels in a direction which is exactly parallel to the light-emitting surface 7a. In other words, the present embodiment encompasses a case where the plurality of light sources 5 emit light whose predominant component travels in a direction which is substantially parallel to the light-emitting surface 7a. It is necessary that each of the plurality of light sources 5 emits light from a surface facing a light-receiving surface 9c of a corresponding one of the recesses 9.

Fine asperities (light diffusing member; not shown in Fig. 2) are provided on at least one of the light-emitting surface 7a and the back surface 7b so as to (i) guide light from each of the plurality of light sources 5 to the light-emitting surface 7a and then (ii) emit the light via the light-emitting surface 7a. The asperities are provided by, e.g., texturing. This causes the light from each of the plurality of light sources 5 to efficiently be guided toward the light-emitting surface 7a of the light guide 7, and therefore allows an improvement in efficiency of light use.

Examples of the light-diffusing member of the present invention encompass: fine asperities as described above (i.e., asperities formed by a surface treatment such as texturing); a printed dot pattern; and a microprism formed so as to be integral with the light guide by precise resin molding. However, the light-diffusing member is not limited to these, and can be a conventional light diffusing member for use in an illumination device.

### <External View of Light Guide>

Fig. 3 is a perspective view illustrating an external view of the light guide 7 as observed from the light-emitting surface 7a side. As described earlier, the arrows R and L in Fig. 3 indicate directions (light-emitting directions) in which each of the plurality of light sources 5 predominantly emit light. According to the backlight device 2 of the present embodiment, pairs of light sources such as 5a and 5a', 5b and 5b', and 5c and 5c' are provided so as to face each other at a predetermined distance. The directions in which the pairs of light sources emit light are set (i) so that the light sources 5a, 5b, and 5c of the pairs of light sources emit light toward the light sources 5a', 5b', and 5c' of the pairs of light sources, respectively, and (ii) so that the light sources 5a', 5b', and 5c' of the pairs of light sources also emit light toward the light source 5a, 5b, and 5c of the pairs of light sources, respectively.

According to the light sources of the backlight device 2, each pair of light sources is arranged such that one of the each pair of light sources complementarily irradiates a region (dead area) where the other of the each pair of light sources cannot irradiate. This causes light emitted from one of the each pair of light sources to be complementarily emitted to the dead area for the other of the each pair of light sources (i.e., area where the other of the each pair of light sources cannot irradiate). This in turn makes it possible to emit light from the entire light-emitting surface 7a, and thus to generate backlighting having no dark area. Note that the light sources 5 in each pair are not necessarily required to be arranged to face each other, and thus are simply required to be arranged so that one of the light sources in each pair can irradiate a region where the other cannot irradiate.

According to the present embodiment, a plurality of light sources 5a, 5a, 5a... (first group of light sources) which are mounted in a line on a single substrate 4 and each of which emits light in the direction (first direction) are indicated by the arrows R. Further, a plurality of light sources 5a', 5a', 5a'... (second group of light sources) which are mounted in a line on a single substrate 4 and each of which emits light in the direction (second direction) are indicated by the arrows L. The substrate 4 on which the plurality of light sources 5a are mounted and the substrate 4 on which the plurality of light sources 5a' are mounted are provided so that the light sources 5a face their respective light sources 5a' at the predetermined distance.

Similarly to the above, according to the present embodiment, (i) a plurality of light sources 5b, 5b, 5b... (first group of light sources) which are mounted in a line on a single substrate 4 and each of which emits light in the direction (first direction) are indicated by the arrows R, and (ii) a plurality of light sources 5c, 5c, 5c... (first group of light sources) which are mounted in a line on a single substrate 4 and each of which emits light in the direction (first direction) indicated by the arrows R. Further, (i) a plurality of light sources 5b', 5b', 5b'... (second group of light sources) which are mounted in a line on a single substrate 4 and each of which emits light in the direction (second direction) are indicated by the arrows L, and (ii) a plurality of light sources 5c', 5c', 5c'... (second group of light sources) which are mounted in a line on a single substrate 4 and each of which emits light in the direction (second direction) are indicated by the arrows L.

Arranging each group of light sources in a line on a single substrate as above allows the light sources, which constitute the backlight device 2, to be provided readily and precisely. This allows an improvement in productivity of the backlight device 2.

### <Light-emitting Element>

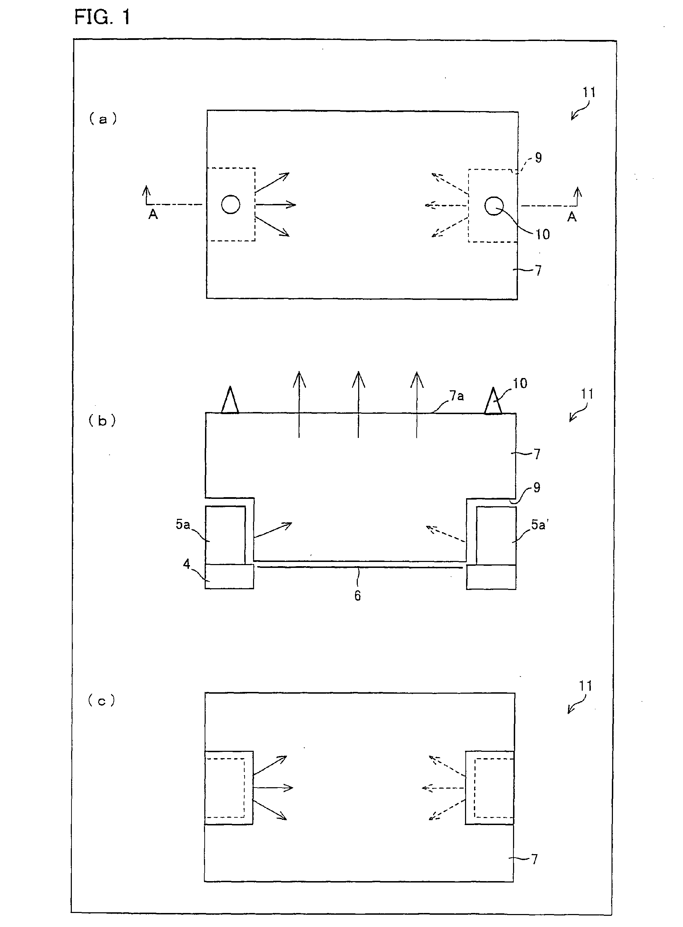

Fig. 4 is a partially enlarged view illustrating a part A (surrounded by a dashed-dotted line in Fig. 3) of the light guide 7 observed in a state where the light guide 7 is further provided with the maintaining sections 10 on the light-emitting surface 7a. A unit illustrated in Fig. 4 is hereinafter referred to as a light-emitting element 11. The light-emitting element 11 corresponds to a light-emitting element of the present invention which light-emitting element constitutes an illumination device and serves as a minimum unit of the illumination device. (a) of Fig. 1 is a plan view illustrating the light-emitting element 11. (c) of Fig. 1 illustrates a bottom plan view of the light-emitting element 11. (b) of Fig. 1 is a cross-sectional view taken along the line A-A of (a) of Fig. 1. As illustrated in (a) through (c) of Fig. 1 and Fig. 4, the light-emitting element 11 includes: light sources 5a and 5a' serving as a first light source and a second light source, respectively; a light guide 7 for causing light from the light sources to be converted into a surface emission; and maintaining sections 10 which protrude from a light-emitting surface 7a and each of which serves as a first protruding section or a second protruding section.

The light sources 5a and 5a' are provided separately inside the light guide 7. Specifically, the light guide 7 includes hollow recesses 9 each provided so that a part of a side surface of the light guide 7 and a part of a bottom surface of the light guide 7 are opened. The light sources 5a and 5a' are contained in a corresponding one of the recesses 9, and are provided so as to face each other at a predetermined distance. The light sources 5a and 5a' are mounted on their respective substrates 4. The directions (indicated by the arrows R and L, respectively) in which the light sources 5a and 5a' predominantly emit light are set so as to be parallel to the light-emitting surface 7a of the light guide 7, and also are set so that each of the light sources 5a and 5a' emits light toward the other.

The light-emitting element 11 thus includes two dot-shaped light sources which are provided so as to face each other and so that one of the two dot-shaped light sources complementarily irradiates a region which the other of the two dot-shaped light sources cannot irradiate. It is possible to produce a large backlight device having no dark area, by arranging a plurality of light-emitting elements 11 in a tiled pattern or a grid pattern.

The light-emitting element 11 of the present embodiment includes two light sources. However, the number of light sources is not limited to this. To achieve as few dead areas as possible, the light-emitting element 11 can instead include three or more light sources.

The following description deals in detail with the arrangement of the light-emitting element 11.

As is described for the backlight device 2, (i) fine asperities (light diffusing member; formed by, e.g., texturing) for guiding light from each of the light sources 5a and 5a' to the light-emitting surface 7a and then emitting the light via the light-emitting surface 7a or (ii) fine prisms (light diffusing member) molded by resin molding so as to be integral with the light guide 7 may be provided on at least one of the light-emitting surface 7a and a back surface 7b of the light-emitting element 11. The asperities or the prisms preferably have a density (i.e., the number of projections (or depressions) per unit area) which varies according to how the light-emitting surface 7a or the back surface 7b is provided relative to the light source 5a or 5a', respectively. Specifically, in order to reduce luminance unevenness, it is preferable to cause a change in the density of the asperities or the prisms in accordance with a luminance distribution observed over the light-emitting surface 7a, (i) in a state where no asperity or no prism is formed on the light-emitting surface 7a or on the back surface 7b or (ii) in a state where the asperities or the prisms are formed so as to have a uniform density.

Alternatively, the asperities or the prisms can be provided on both the light-emitting surface 7a and the back surface 7b of the light guide 7. In this case, the density of the asperities or the prisms on each of the light-emitting surface 7a and the back surface 7b is adjusted so that luminance unevenness of light emissions is reduced by a combination of optical processes brought about by the respective surfaces 7a and 7b.

Fig. 5 shows a distribution of density (i.e., the number of projections present per unit area of 1 mm × 1 mm; hereinafter referred to as "texture density") of projections and depressions formed by texturing the light-emitting surface 7a of the light-emitting element 11. (a) of Fig. 5 shows a texture density with different shading which varies depending on positions relative to the respective light sources 5a and 5a' of the light-emitting element 11. (b) of Fig. 5 is a graph in which the light-emitting surface 7a is expressed by an x-y plane coordinate and a texture density for the x-y coordinate is expressed by a z-coordinate. Fig. 6 shows an illuminance distribution over the light-emitting surface 7a (on which the maintaining sections 10 have not been formed yet) having the texture density illustrated in Fig. 5.

As illustrated in Fig. 5, the texture density is the lowest directly above positions where the light sources 5a and 5a' are provided which positions correspond to respective reference positions on x-y plane coordinate. The texture density of a position on the x-y plane coordinate becomes gradually greater as the position is farther away from the reference positions. Further, the texture density is the highest in regions located at the four corners of the square-shaped light-emitting surface 7a. The regions each have a shape of a right triangle having a corner in the vicinity of either of the light sources 5a and 5a'.

Fig. 7 shows another example distribution of density of projections and depressions formed on the light-emitting surface 7a of the light-emitting element 11. Fig. 8 shows an observed illuminance distribution (luminance distribution) for the light-emitting element 11 having the texture density illustrated in Fig. 7. The texture density distribution illustrated in Fig. 7 has a tendency similar to a tendency of the texture density distribution described above with reference to Fig. 5.

For comparison with the above distributions, Fig. 9 shows an illuminance distribution observed in a case where the projections and depressions are distributed uniformly (i.e., at a constant density) over the light-emitting surface 7a. As illustrated in Fig. 9 (in particular, the graph on the right), in the case where the texture density is constant over the light-emitting surface 7a, there occurs uneven illuminance over the light-emitting surface due to light-emitting properties of the respective LEDs used as the light sources. In other words, there occur a large number of illuminance peaks having different values entirely over a range within which the illuminance can be distributed.

In contrast, in the case where the texture density varies according to positions relative to the light sources as illustrated in Figs. 5 and 7, light is emitted substantially uniformly (so that the luminance at each position falls within a predetermined range) except for the regions (light source-provided regions) directly above the LEDs (see Figs. 6 and 8). More specifically, luminance values at the respective positions are concentrated only within a part of the entire range within which the illuminance can be distributed. For example, in Fig. 6, the luminance values are concentrated only within a range from approximately 400 lux to 1000 lux.

Note that the projections formed on the light-emitting surface 7a can have a shape of, e.g., a substantial hemisphere as illustrated in Fig. 10. Note, however, that the shape and dimensions of a projection illustrated in Fig. 10 are merely an example.

As described above, the density of the asperities formed on at least one of the light-emitting surface 7a and the back surface 7b of the light guide 7 varies according to how the at least one of the surfaces is provided relative to the light sources. This makes it possible to produce a light-emitting element having a property of uniform luminance. The asperity density distributions illustrated in Figs. 5 and 7, respectively, are merely examples. The distribution of the present embodiment is not limited to these.

Fig. 11 is a view schematically illustrating, on the basis of the illuminance distributions illustrated in Figs. 6 and 8, a region irradiated by the light sources 5a and 5a' of the light-emitting element 11. As illustrated in Fig. 11, the two light sources 5a and 5a' facing each other emit light in the directions indicated by the arrows R and L. This allows each of the light sources to irradiate a region where the other cannot irradiate.

However, even the above arrangement will cause a region in which light intensity is relatively low. Specifically, each of the light sources 5a and 5a' can emit light having sufficient intensity toward a region which is at an angle θ of approximately 30° or larger with a light emission surface. In contrast, each of the light sources 5a and 5a' can only emit low-intensity light, as compared to the above region, toward (i) regions which is at an angle θ of smaller than approximately 30° with the light emission surface and (ii) regions which are located behind the light emission surface. The regions (i) and (ii) are hatched in Fig. 11, and are referred to as corner parts 12a, 12b, 12a', and 12b', respectively.

In view of the circumstances, the foregoing light-diffusing projections and depressions, provided on the light-emitting surface 7a or on the back surface 7b of the light guide 7, preferably have a relatively high density in the corner parts 12a, 12b, 12a', and 12b'.

### <Positions Where Maintaining Sections Are Formed>

In terms of prevention, it is important when suppressing luminance unevenness over the light-emitting surface 7a where to provide the maintaining sections 10 on the light-emitting surface 7a having such a luminance distribution. This is due to the following reason. Specifically, the maintaining sections 10 serve to reduce luminance non-uniformity by securing a gap, having a predetermined distance, between the light-emitting surface 7a and the optical sheet 8 so as to cause multiple reflections in the gap. However, light emitted from the light-emitting surface 7a may be reflected by the maintaining sections 10, so that luminance unevenness is caused. Note that a conventional illumination device has not considered how such maintaining sections are provided. As such, a display device employing such a conventional illumination device as a backlight device will cause a low display quality.

In view of the circumstances, the present embodiment specifies where to provide the maintaining sections 10 on the light-emitting surface 7a. The following description deals with where the maintaining sections 10 are specifically provided.

As illustrated in Fig. 6, the light-emitting surface 7a, illuminance distributes, on which no maintaining section 10 is provided, over a range from approximately 400 lux to 2000 lux. The illuminance is, however, mostly concentrated within the narrow range from 400 lux to 1000 lux as described above. Assuming that the illuminance, i.e., the luminance, having such a distribution, is divided into a plurality of levels between a low luminance and a high luminance, it is possible to identify a first region, on the light-emitting surface 7a, which has the lowest luminance level.

In Fig. 6, illuminance is graduated in 100-lux divisions. Assuming, for example, that the illuminance distribution range from 400 lux to 2000 lux is divided into levels in 100-lux divisions, the first region having the lowest luminance level corresponds to a region having an illuminance in a range from 400 lux to 500 lux.

Note that it is possible to define the lowest level, regardless of divisions in which the illuminance distribution range from an upper limit to a lower limit of the luminance distribution is divided into. As to in which divisions the illuminance distribution is divided into, it is possible to appropriately determine based on a light-emitting property of the light sources, a material of the light guide 7 and a material of the maintaining sections 10, and a size of the maintaining sections 10.

As is clear from Figs. 6, 8, and 11, the above first region having the lowest luminance level is located in, e.g., regions surrounding the respective light sources 5a and 5a', and the corner parts 12a, 12b, 12a', and 12b'. It follows that the maintaining sections 10 should be provided in the regions such as the regions surrounding the respective light sources 5a and 5a', and the corner parts 12a, 12b, 12a', and 12b'.

According to the present invention, the light sources 5a and 5a' emit light predominantly in the directions which are parallel to the light-emitting surface 7a. As illustrated in Figs. 6 and 8, even such an arrangement may cause light to be brighter in regions of the light-emitting surface 7a which regions are located directly above positions where the light sources 5a and 5a' are provided (the regions being hereinafter referred to as "light source-provided regions"), than in other regions. This unfortunately results in formation of bright regions. In this case, dimmer means (later described) is provided in the light source-provided regions. This allows the maintaining sections 10 to be provided in the light source-provided regions as illustrated in Fig. 1. This is because the light source-provided regions become part of the first region having the lowest luminance level.

### <Modification of Light Guide>

Fig. 12 illustrates a light guide 70, which is a modification of the light guide 7. Fig. 12 is a cross sectional view of the light guide 70, taken along line B-B' of Fig. 11.

The light guide 70 has a thickness (i.e., a width in a direction perpendicular to a light-emitting surface 70a) which is smaller as it is farther away from a light source 5. This means that the light guide 70 has a back surface 70b which is not planar and has a tapered shape which causes the thickness to be smaller as it is farther away from the light source 5 (for example, see Fig. 12). In the case where the back surface 70b has such a tapered shape, the light guide 70 can have the thickest thickness of approximately 1 mm to 2 mm, and can have the thinnest thickness of 0.6 mm to 1.2 mm. Note, however, that the shape of the back surface 70b of the present embodiment is not limited to the tapered shape.

According to the above arrangement, total reflection conditions will no longer satisfy Snell's law during the process in which the light emitted from a light source 5 travels through the light guide 70. This allows an improvement in efficiency of light emission as compared to the case in which the light guide 70 has a planar back surface. Further, even in a region of the light-emitting surface 70a which region is far from the light source 5 and is thus reached by only a small amount of light from the light source 5, the light emitted has an intensity substantially equal to that of light emitted from a region of the light-emitting surface 70a which region is near the light source 5. As a result, it is possible to further improve luminance uniformity.

Further, the light-emitting surface 70a has, in each of the regions (i.e., the light source-provided regions described above) which are located directly above the light sources 5, taper parts 70d each of which declines so as to be closer to the light source 5. The taper parts 70d function as the dimmer means for reducing an amount of light which is directly emitted from the light source 5 via the light-emitting surface 70a. It is possible to further improve luminance uniformity, by thus securing the taper parts 70d in the light-emitting surface 70a.

The dimmer means of the present invention can be, other than the taper parts 70d, a light-blocking member, which is commonly used to block light, which has been subjected to a process such as masking, printing of white ink, or printing of metal such as Al. Alternatively, the light-blocking member can be provided in each of the light source-provided regions in the shape of a plurality of dots.

The taper parts 70d or the light-blocking member can be provided not only in the light source-provided regions, but also in a peripheral region of the light source-provided region which peripheral region light directly enters from the light source 5. Specifically, the taper parts or the light-blocking members can be provided not only in the regions of the light-emitting surface 70a which regions are located directly above the respective light sources 5, but also in the regions which are peripheral regions located obliquely above the respective light sources 5. Alternatively, the taper parts or the light-blocking members can be provided along respective edge sides of the light guide 70 which edges are located above the respective light sources 5. These arrangements more reliably block light which directly enters the light-emitting surface 70a from the light sources 5.

The light-emitting element 11 preferably has projections and depressions that are provided on surfaces 70c of the light guide 7 so as to diffuse light, which surfaces 70c face light emission surfaces 5s of the respective light sources 5 (see Fig. 12). The surfaces 70c correspond to the respective light-receiving surfaces 9c, which are the respective side surfaces of the recess 9. The light emission surfaces correspond to side surfaces of the respective light sources 5 which have a shape of, for example, a cuboid. This causes light emitted from the light sources 5 to be scattered, and therefore allows prevention of the surfaces 70c from reflecting light. As a result, it is possible to efficiently use the light emitted from the light sources 5. The projections and depressions provided on each of the surfaces 70c are fine projections and depressions formed by a process which is commonly carried out for prevention of light reflection. The process is, in particular, a process of forming projections and depressions which process is carried out with respect to an illumination device in which a conventional LED light source of side-light type. The projections and depressions each preferably have a width of approximately several tens of microns.

### <Driving of Light-emitting Element>

As described above, the backlight device 2 of the present embodiment can be constituted by a combination of a plurality of the light-emitting elements 11 illustrated in Fig. 4. In the case where the backlight device 2 is constituted by such a combination of the plurality of the light-emitting elements 11, the backlight device 2 preferably includes a drive section (not shown) which is capable of independently driving the light-emitting elements 11. This arrangement allows light emission intensity to be changed for each of the plurality of light-emitting elements 11. As a result, it is possible to change, in accordance with each display region of the liquid crystal display panel 3, the intensity of light from the backlight device 2 for each region.

For example, the drive section adjusts the intensity of light from each of the light-emitting elements 11 so as to decrease the light intensity in a region in which a dark image is displayed, and so as to increase the light intensity in a region in which a bright image is displayed. This allows images to be displayed with higher contrast.

The light sources 5 can be driven by various methods, other than the above method of independently driving the plurality of light-emitting elements 11. For example, the light sources 5 can be driven so that light emission is controlled for each group of light sources mounted on a single substrate 4. This allows the backlight device 2 to emit light for each substrate line. In case of driving the backlight device to emit light for each line as above and sequentially selecting a line for light emission, the liquid crystal display panel 3 has an improvement in response of motion image display. This allows motion images to be displayed while having no blur.

The backlight device 2 of the present invention can further include optical sensors such as photodiodes in the light guide 7 or in the light guide 70. The optical sensors can be replaced by sensors such as color recognition sensors or temperature sensors. Light sources such as LEDs have an individual difference in, for example, their light amounts. In view of the circumstances, any of the sensors is provided in each of the light sources. The sensors thus provided feed back their sensed results to the drive section so that the drive section adjusts amounts of light from the light sources in response to the sensed results. This allows a reduction in the individual difference of the amounts of light emitted by the respective light sources. As a result, it is possible to further improve luminance uniformity over a light-emitting surface of an illumination device constituted by the backlight device 2. Note that the above sensors are not necessarily provided in the respective light sources. Alternatively, one (1) sensor can be arranged so as to be shared by two or more light sources.

Fig. 16 illustrates an example case in which a backlight device of the present invention includes the above sensors. A backlight device (illumination device) 32 includes photodiodes (sensors) 31 for sensing amounts of light emitted by the light sources 5 (see Fig. 16). Except that the sensors are further included, the backlight device 32 has an arrangement identical to that of the backlight device 2 illustrated in Fig. 2. Thus, members of the backlight device 32 which are identical to those of the backlight device 2 are assigned the same reference numerals, and are not described here.

As illustrated in Fig. 16, the light guide 7 of the backlight device 32 further includes, between the respective recesses 9 in each of which a light source 5 is provided, a recess 9' in which a sensor is provided. A photodiode (sensor) 31 is provided in each of the recesses 9'. Each of the photodiodes (sensors) 31 detects brightness and then feeds back the brightness (i) so that a driver circuit (not shown) recognizes a difference in brightness which varies from location to location and (ii) so that the amounts of light emitted by the light sources are adjusted. This makes it possible to provide an illumination device which emits light having more uniform luminance.

### <How To Provide Light-emitting Elements and Light sources>

The plurality of light-emitting elements 11 can be provided not only in a grid pattern as above, but also in a different pattern. The following description deals with another example of how the plurality of light-emitting elements 11 are provided.

In Fig. 13, a plurality of light-emitting elements 11 each having the arrangement illustrated in Fig. 4 are provided in an x direction not in a line, but in a staggered pattern. Specifically, a light source 5a' in a first light-emitting element 11 is provided so as not to be close to a light source 5b in a second light-emitting element 11 which is adjacent, in the x direction, to the first light-emitting element 11. In contrast, the light-emitting elements 11 are provided in a line in a y direction as in Fig. 2.

The arrangement illustrated in Fig. 13 is related to a problem that LEDs generate heat while emitting light. Depending on the kind, an LED has a light emission efficiency that varies according to temperature. Normally, an excessively high temperature of an LED causes a reduction in light emission efficiency. As such, it is necessary to dissipate heat generated by the LEDs so as to maintain the light emission efficiency, in the case where LEDs are used as the light sources. In view of the circumstances, the plurality of light-emitting elements 11 are provided in the staggered pattern (i.e., so as to be displaced in the y direction) in the x direction as described above. This causes the light sources to be provided at a certain distance from one another, and can thus prevent the light sources from being close to one another. It follows that it is possible to maintain the light emission efficiency of the LEDs, because it is possible to improve a heat dissipation property.

Fig. 14 illustrates another example arrangement of the light-emitting element of the present invention, and an example of how a plurality of the light-emitting element are combined so as to be included in a backlight device.

Like the light-emitting element 11 illustrated in Fig. 4, a light-emitting element 21 illustrated in Fig. 14 includes: two light sources 5a and 5a'; and a light guide 7 for causing light from the light sources to be converted into a surface emission. The light sources 5a and 5a' are contained in their respective recesses (not shown) included in the light guide 7, and are provided so as to face each other. Directions (indicated by arrows R and L, respectively) in which the light sources 5a and 5a' emit light are set so as to be parallel to a light-emitting surface 7a of the light guide 7, and also are set so that each of the light sources emits light toward the other light source.

According to the light-emitting element 11 illustrated in Fig. 4, each of the light sources 5a and 5a' is provided, as viewed from directly above the light-emitting surface 7a of the light guide 7 having a shape of a substantial square, in the vicinity of the middle of one of the sides of the substantial square. In contrast, according to the light-emitting element 2 1 illustrated in Fig. 14, each of the light sources 5a and 5a' is provided, as viewed from directly above the light-emitting surface 7a of the light guide 7 having a shape of a substantial square, at one of diagonally opposite corners of the substantial square.

Providing each of the light sources 5a and 5a' at this position prevents the corner parts from becoming dark. This makes it possible to produce an illumination device having more uniform luminance.

As described above, the light-emitting element 21 includes two dot-shaped light sources facing each other which are provided respectively at diagonally opposite corners of the substantial square formed by the light guide 7. This allows the light sources to sufficiently irradiate the corner parts, which cannot be easily irradiated in the case where each of the light sources is provided in the vicinity of the middle of one of the sides of the substantial square. Thus, the light-emitting element 21 has an excellent luminance uniformity and an improved efficiency in light use. Further, arranging a plurality of the light-emitting element 21 makes it possible to produce a large backlight device which has no dark area and which has more uniform luminance.

Fig. 15 illustrates another example of how the light-emitting elements 21 are combined.

Light-emitting elements 21 illustrated in Fig. 15 each include light sources provided in the same manner as those included in each of the light-emitting elements 21 illustrated in Fig. 14. However, the light-emitting elements 21 illustrated in Fig. 15 are provided in a staggered pattern with respect to an x direction. Specifically, a light source 5a' in a first light-emitting element 21 is provided so as not to be close to a light source 5b in a second light-emitting element 21 which is adjacent, in the x direction, to the first light-emitting element 21. In contrast, the light-emitting elements 21 are provided in a line in a y direction.

In the case where LEDs are used as the light sources, it is necessary to dissipate heat generated by the LEDs. In view of the circumstances, the light-emitting elements 21 are provided in the staggered pattern in the x direction as described above. This causes the light sources to be provided at a certain distance from one another, and can thus prevent the light sources from being close to one another. It follows that it is possible to improve the heat dissipation property.

The above description deals with examples of how the light guide units are provided in the illumination device of the present invention. The present invention is, however, not necessarily limited to such arrangements. The two light sources included in a light-emitting element may be provided in any manner, provided that they emit light in directions different from each other. Further, the light sources included in the illumination device may be provided in any manner, provided that at least two of the light sources in the illumination device emit light in directions different from each other. Thus, the light sources may even be provided completely at random.

The illumination device of the present invention has an excellent luminance uniformity even in a case where its light-emitting area is large. Thus, the illumination device is particularly preferably used as a backlight device for a liquid crystal display device having a large screen. However, the applicability of the present invention is not limited to this. The illumination device of the present invention may thus be used as a backlight device for any liquid crystal display panel. Furthermore, the illumination device of the present invention may be used not only for liquid crystal display devices, but also for, e.g., interior lighting, and lighting for an outdoor bulletin board.

### (Modification of Maintaining Sections)

Fig. 17 illustrates rib-shaped maintaining sections 20 as a modification of the maintaining sections 10 having the tapered shape. The maintaining sections 20 each have a predetermined width and height, and extend in length entirely over edges of the light guide 7 which edges are located above the respective light sources 5a and 5a'.

Each of the maintaining sections 20 formed on the light-emitting surface 7a is simply required to be provided, in a plan view of the light-emitting surface 7a as in Fig. 11, in a band-shaped region between (i) the emission surface (indicated by a dashed line in Fig. 11) of the light source 5a or 5a' and (ii) a corresponding one of the above edges.

### [Embodiment 2]

Another embodiment of the present invention is described below with reference to Figs. 18 through 20. For convenience of explanation, members of the present embodiment which are identical in arrangement and function to their equivalents illustrated in the drawings for Embodiment 1 are assigned the same reference numerals, and are not described here.

As illustrated in Fig. 18, a liquid crystal display device 1 of the present embodiment differs from the liquid crystal display device of Embodiment 1 in how the maintaining sections 10 are provided. According to the present embodiment, the maintaining sections 10 facing the optical sheet 8 are not provided on the light-emitting surface 7a of the light guide 7 (see Fig. 2). As an example of providing the maintaining sections 10 facing the optical sheet 8, the maintaining sections 10 may be molded so as to be integral with a transparent plate 13 as illustrated in Fig. 18. Alternatively, the maintaining sections 10 may be molded so as to be integral with the diffusing plate included in the optical sheet 8.

In the case where the maintaining sections 10 are formed on the transparent plate 13, the transparent plate 13 is fixed on the light-emitting surface 7a with use of an adhesive, for example. The transparent plate 13 may, for example, be a transparent polycarbonate plate having a thickness of 1.0 mm. Setting a height of the maintaining sections 10 to, for example, 2.0 mm makes it possible to produce a backlight device 2 having a thickness identical to that of the backlight device of Fig. 2, which includes the maintaining sections 10 having the height of 3.0 mm.

The maintaining sections 10 are formed so as to be provided in the same manner as those of Embodiment 1. Specifically, assuming that luminance over the light-emitting surface 7a is divided into a plurality of levels, the maintaining sections are provided in a region having the lowest level.

The present modification not only achieves the above-described advantages brought about by the arrangement of Fig. 2, but also uses the transparent plate 13 to prevent the light guide 7 from being bent by heat generated by the light sources 5. This improves flatness of the light-emitting surface 7a of the light guide 7. This in turn reliably maintains the distance between a surface 13a of the transparent plate 13 and the optical sheet 8, and thus maintains a constant distance of a light-diffusing space formed between the surface 13a and the optical sheet 8. As a result, it is possible to reliably average light to be emitted onto the optical sheet 8, and thus to improve luminance uniformity.

In a case where the transparent plate 13 having the maintaining sections 10 is placed on the light guide 7 so that the surface 13a of the transparent plate 13 is in entire contact with the light-emitting surface 7a of the light guide 7, the flatness of the light-emitting surface 7a is improved, and the luminance uniformity is thus improved as described above. In contrast, in a case where the surface 13a is only in partial contact with the light-emitting surface 7a, luminance unevenness of another type is caused, and the luminance uniformity is thus impaired.

Fig. 19 is a cross-sectional view schematically illustrating the arrangement of the liquid crystal display device 1 in which the surface 13a of the transparent plate 13 is in partial contact with (or is close to) the light-emitting surface 7a of the light guide 7. As illustrated in Fig. 19, in a case where the light-emitting surface 7a is not a flush surface or where the transparent plate 13 is flexed, the surface 13a is separated from the light-emitting surfaces 7a by a non-uniform distance, and is thus in partial contact with or close to the light-emitting surface 7a. This leads to interference fringes (Newton's rings) occurring in the vicinity of a portion at which the surface 13a is in contact with or close to the light-emitting surface 7a. Such interference fringes are thus observed as luminance unevenness.

To eliminate the unevenness, the surface 13a is preferably roughened by, e.g., forming fine asperities thereon. Fig. 20 is a cross-sectional view schematically illustrating an arrangement of the liquid crystal display device 1 in which the surface 13a of the transparent plate 13 having the maintaining sections 10 has been roughened.

According to the above arrangement, an air layer formed between the surface 13a and the light-emitting surface 7a is numerously varied in thickness. In other words, slight variations in thickness are densely present. This reduces pitches of the interference fringes, and thus allows the interference fringes to be averaged over an entire display screen. As a result, such interference fringes are not easily visible as luminance unevenness.

### [Embodiment 3]

Still another embodiment of the present invention is described below with reference to Figs. 21 and 22. For convenience of explanation, members of the present embodiment which are identical in arrangement and function to their equivalents illustrated in the drawings for Embodiment 1 are assigned the same reference numerals, and are not described here.

As illustrated in Fig. 21, a liquid crystal display device 1 of the present embodiment differs from the liquid crystal display devices of Embodiments 1 and 2 in how the maintaining sections 10 are provided. The maintaining sections 10 of the present embodiment are not provided on the light-emitting surface 7a of the light guide 7 (see Fig. 2), but are molded so as to be integral with the transparent plate 13, which is then fixed via, e.g., an adhesive on a lower surface 8a of the optical sheet 8 facing the light-emitting surface 7a.

As such, the maintaining sections 10 protrude not in an upward direction from the light-emitting surface 7a toward the optical sheet 8, but in a downward direction from the lower surface of the optical sheet 8 toward the light-emitting surface 7a.

According to the present embodiment, the light-emitting element 11, which serves as a part of the backlight device 2, includes: light sources 5 (first light source); a light guide 7 having a light-emitting surface 7a for emitting light from the light sources 5; and maintaining sections 10 (first protruding sections) which are provided so as to maintain a predetermined distance with respect to the light-emitting surface 7a and which protrude toward the light-emitting surface 7a. Further, the light-emitting element 11 additionally includes, as a fundamental constituent member, an optical sheet 8 having a function of diffusing light emitted from the light sources 5.

The maintaining sections 10 are formed so as to be provided in the same manner as those of Embodiment 1. Specifically, assuming that luminance over the light-emitting surface 7a is divided into a plurality of levels, the maintaining sections are provided in a region having the lowest level.

In order to minimize an influence on luminance, the maintaining sections 10 protruding from the optical sheet 8 toward the light-emitting surface 7a preferably have a shape of a circular cone or a pyramid. This is because the maintaining sections 10 contact the light-emitting surface 7a by their respective tips, and an area of the contact between the maintaining sections 10 and the light-emitting surface 7a is minimal in the case where the maintaining sections have the above shape.

As illustrated in a partially enlarged view in Fig. 21, even with the above arrangement, the lower surface 8a is separated from the surface 13a by a non-uniform distance in the case where, for example, the optical sheet 8 and/or the transparent plate 13 is/are flexed. This leads to an occurrence of interference fringes, which are observed as luminance unevenness.

To eliminate the unevenness, the surface 13a is preferably roughened as in Embodiment 2 by, e.g., forming fine asperities thereon as illustrated in Fig. 22.

The above description deals with various specific examples as Embodiments 1 through 3. However, the present invention is not limited to these specific examples. For example, a number of the maintaining sections 10 provided with respect to the light-emitting surface 7a is not particularly limited, provided that it is possible to maintain a constant distance of the gap provided between the light guide 7 and the optical sheet 8. Specifically, each light-emitting element 11 may be provided with a single maintaining section 10, or each group of a plurality of light-emitting elements 11 which are adjacent to one another may be provided with a single maintaining section.

Reducing the number of the maintaining sections 10 as described above allows for a further reduction in a proportion of light emitted from the light-emitting surface 7a, the proportion being reflected by the maintaining sections 10. This further improves luminance uniformity, and also allows the backlight device 2 to be lighter.

If priority is given to production efficiency, all the individual light guides 7 preferably have an identical shape. In a case where the maintaining sections 10 are formed integrally with the light guides 7, a total number of the maintaining sections 10 depends on a number of the light guides 7. Thus, to reduce the total number of the maintaining sections 10, the maintaining sections 10 are preferably produced as a member separate from the light guides 7. This improves a degree of freedom of design in providing the maintaining sections 10 with respect to the light guides 7.

As described above, each liquid crystal display device of the present invention includes the above-described backlight device 2. As such, it is possible to emit, to the liquid crystal display panel 3, light having an improved uniformity, and thus to improve display quality.

Further, the illumination device including the backlight device 2 of the present invention has an excellent luminance uniformity even in a case where its light-emitting area is large. Thus, the illumination device is particularly preferably used as a backlight device for a liquid crystal display device having a large screen. However, the applicability of the present invention is not limited to this. The illumination device of the present invention may be used as a backlight device for any liquid crystal display panel.

As described above, a light-emitting element of the present invention includes: a first light source; a light guide having a light-emitting surface via which light from the first light source is emitted; and a first protruding section provided so as to protrude from the light-emitting surface, the first light source having directivity which causes components of the light traveling in a first direction, which is parallel to the light-emitting surface, to be more than those in a direction perpendicular to the light-emitting surface, the light guide at least having a first light-receiving surface for receiving the components of the light traveling in the first direction, and the first protruding section being provided in a first region, indicative of a lowest level of luminance, on the light-emitting surface, in a case where luminance over the light-emitting surface is divided into a plurality of levels between a low luminance and a high luminance.

As described above, another light-emitting element of the present invention includes: a first light source; a light guide having a light-emitting surface via which light from the first light source is emitted; an optical sheet having a first protruding section protruding toward the light-emitting surface, and having a function of diffusing the light emitted from the light-emitting surface, the first protruding section being provided so as to maintain a predetermined distance with respect to the light-emitting surface; the first light source having directivity which causes components of the light traveling in a first direction, which is parallel to the light-emitting surface, to be more than those in a direction perpendicular to the light-emitting surface, the light guide at least having a first light-receiving surface for receiving the components of the light traveling in the first direction, and the first protruding section being positioned in a first region of the optical sheet, the first protruding section being provided in a first region, indicative of a lowest level, on the optical sheet, in a case where luminance over the light-emitting surface is divided into a plurality of levels between a low luminance and a high luminance.

As compared to conventional arrangements, the above arrangements prevent luminance unevenness which would otherwise be caused by a region in which the first light source is provided and which would thus be brighter than other regions. The above arrangements also make it possible to prevent luminance unevenness from occurring due to protrusion of the first protruding section from the light-emitting surface. As a result, it is possible to further improve luminance uniformity.

An illumination device of the present invention includes any one of the light-emitting elements, and thus is capable of emitting, via the light-emitting surface, to an object to be irradiated, light having an excellent luminance uniformity.

A liquid crystal display device of the present invention includes a light-emitting element of the present invention or an illumination device of the present invention as a backlight device. This makes it possible to emit, to a liquid crystal display panel, light having better uniformity. As a result, it is possible to improve display quality.

The present invention is not limited to the description of the embodiments above, but may be altered in various ways by a skilled person within the scope of the claims. Any embodiment based on a proper combination of technical means disclosed in different embodiments is also encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The liquid crystal display device of the present invention is widely applicable as various display devices such as a large screen television, a monitor of, e.g., a computer, and a display device for mobile electronic hardware. The light-emitting element and the illumination device of the present invention is suitably applicable as a backlight device for the above various display devices.

## Claims

1. A light-emitting element, comprising:
a first light source;
a light guide having a light-emitting surface via which light from the first light source is emitted; and
a first protruding section provided so as to protrude from the light-emitting surface,
the first light source having directivity which causes components of the light traveling in a first direction, which is parallel to the light-emitting surface, to be more than those in a direction perpendicular to the light-emitting surface,
the light guide at least having a first light-receiving surface for receiving the components of the light traveling in the first direction, and
the first protruding section being provided in a first region, indicative of a lowest level of luminance, on the light-emitting surface, in a case where luminance over the light-emitting surface is divided into a plurality of levels between a low luminance and a high luminance.

2. The light-emitting element according to claim 1, further comprising:
a second light source having directivity which causes components of light travel in a second direction, which is parallel to the light-emitting surface, to be more than those in the direction perpendicular to the light-emitting surface,
the light guide having a second light-receiving surface for receiving, from the second light source, the components of the light traveling in the second direction, and
the first direction differing from the second direction.

3. The light-emitting element according to claim 2, further comprising:
a second protruding section provided so as to protrude from the light-emitting surface,
the second protruding section being provided in a second region, indicative of the lowest level of luminance, on the light-emitting surface and in a vicinity of the second light source.

4. The light-emitting element according to claim 2, wherein each of the first light-receiving surface and the second light-receiving surface constitutes an inner wall of a recess formed in a bottom surface of the light guide.

5. The light-emitting element according to claim 3 or 4, further comprising:
an optical sheet for diffusing the light emitted from the light-emitting surface, the optical sheet being provided so as to face the light-emitting surface at a distance maintained by the first protruding section and the second protruding section.

6. A light-emitting element, comprising:
a first light source;
a light guide having a light-emitting surface via which light from the first light source is emitted;
an optical sheet having a first protruding section protruding toward the light-emitting surface, and having a function of diffusing the light emitted from the light-emitting surface, the first protruding section being provided so as to maintain a predetermined distance with respect to the light-emitting surface;
the first light source having directivity which causes components of the light traveling in a first direction, which is parallel to the light-emitting surface, to be more than those in a direction perpendicular to the light-emitting surface,
the light guide at least having a first light-receiving surface for receiving the components of the light traveling in the first direction, and
the first protruding section being positioned in a first region of the optical sheet,
the first protruding section being provided in a first region, indicative of a lowest level, on the optical sheet, in a case where luminance over the light-emitting surface is divided into a plurality of levels between a low luminance and a high luminance.

7. The light-emitting element according to any one of claims 1 to 6, wherein:
the light guide has a bottom surface which faces the light-emitting surface; and
projections and depressions, having a distribution density which varies according to a position on the light-emitting surface or the bottom surface, are provided in at least one of the light-emitting surface and the bottom surface so as to achieve uniformity of luminance of the light emitted from the light-emitting surface.

8. The light-emitting element according to claim 5 or 6, wherein the optical sheet facing the light-emitting surface has a lower surface on which projections and depressions, having a distribution density which varies according to a position on the lower surface, are provided so as to achieve uniformity of luminance of light emitted from the optical sheet.

9. The light-emitting element according to claim 1 or 6, further comprising:
a transparent plate,
wherein the first protruding section is formed integrally with the transparent plate.

10. The light-emitting element according to claim 9, wherein the transparent plate has a roughened surface which is opposite to a surface on which the first protruding section is formed.

11. The light-emitting element according to claim 1 or 6, wherein the light guide has a thickness which is smaller as it is farther away from the first light source in the first direction.

12. The light-emitting element according to claim 1 or 6, further comprising:
dimmer means, provided in a bright region on the light-emitting surface, for reducing an amount of incident light, the bright region directly receiving the light emitted from the first light source.

13. The light-emitting element according to any one of claims 1 to 12, wherein at least one of the first protruding section and the second protruding section is made of a material having a property of transmitting light and a property of diffusing light.

14. An illumination device, comprising:
a light-emitting element recited in any one of claims 1 to 13,
the illumination device emitting light, via the light-emitting surface, toward an object to be irradiated.

15. The illumination device according to claim 14, wherein the illumination device is constituted by a combination of a plurality of light-emitting elements.

16. The illumination device according to claim 15, further comprising:
a drive section for independently driving the plurality of the light-emitting elements.

17. The illumination device according to any one of claims 14 to 16, wherein a sensor is provided inside the light guide.

18. A liquid crystal display device comprising, as a backlight device, a light-emitting element recited in any one of claims 1 to 13 or an illumination device recited in any one of claims 14 to 17.
